# EUROPÄISCHE PATENTSCHRIFT

(11) **EP 3 377 304 B1**
(45) Veröffentlichungstag und Bekanntmachung des Hinweises auf die Patenterteilung: **01.11.2023**
(21) Anmeldenummer: 16800898.5
(22) Anmeldetag: 10.11.2016
(51) Int. Cl.: B29C 64/153, B22F 10/28, B22F 12/42, B22F 12/45, B29C 64/277, B33Y 30/00

(54) **VORRICHTUNG ZUR GENERATIVEN HERSTELLUNG EINES DREIDIMENSIONALEN OBJEKTS**
DEVICE FOR THE GENERATIVE PRODUCTION OF A THREE-DIMENSIONAL OBJECT
DISPOSITIF DE FABRICATION ADDITIVE D'UN OBJET TRIDIMENSIONNEL

(30) Priorität: 16.11.2015 DE 102015119745
(43) Veröffentlichungstag der Anmeldung: 26.09.2018
(60) Teilanmeldung: 23197953.5
(73) Patentinhaber: Concept Laser GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2016/077227
(87) Internationale Veröffentlichungsnummer: WO 2017/084955

(56) Entgegenhaltungen:
- WO-A1-2014/199149
- US-A1- 2014 252 687
- US-A1- 2014 263 209

## Beschreibung

Die Erfindung betrifft eine Vorrichtung zur generativen Herstellung eines dreidimensionalen Objekts durch sukzessive schichtweise selektive Verfestigung von Baumaterialschichten aus verfestigbarem Baumaterial vermittels wenigstens eines Laserstrahls, umfassend wenigstens eine Einrichtung zur Erzeugung wenigstens eines Laserstrahls zur schichtweisen selektiven Verfestigung einzelner Baumaterialschichten aus verfestigbarem Baumaterial.

Derartige Vorrichtungen sind zur generativen Herstellung dreidimensionaler Objekte an und für sich bekannt. Vermittels entsprechenden Vorrichtungen werden herzustellende dreidimensionale Objekte durch sukzessive schichtweise selektive Verfestigung von in einer Bauebene aufgebrachten Baumaterialschichten aus verfestigbarem Baumaterial in jeweiligen Querschnittsbereichen der jeweils herzustellenden Objekte entsprechenden Bereichen vermittels eines Energie- bzw. Laserstrahls, generativ aufgebaut. Die sukzessive selektive schichtweise Verfestigung der zu verfestigenden Baumaterialschichten erfolgt auf Grundlage von die geometrische Gestalt, d. h. insbesondere die schichtbezogenen Querschnittsgeometrien, des jeweils herzustellenden dreidimensionalen Objekts beschreibenden Baudaten.

Zur Erzeugung entsprechender Laserstrahlen wird eine Laserstrahlerzeugungseinrichtung verwendet, welche typischerweise außerhalb einer der Vorrichtung zugehörigen Bau- oder Prozesskammer angeordnet ist. Ein über eine entsprechende Laserstrahlerzeugungseinrichtung erzeugter Laserstrahl wird über eine auch als "Scanner" bezeichnete Strahlablenkeinrichtung auf eine selektiv zu verfestigende Baumaterialschicht gelenkt.

Diese Konfiguration entsprechender Vorrichtungen ist, insbesondere im Hinblick auf deren anlagentechnischen Aufbau, vergleichsweise aufwändig und insofern weiterentwicklungsbedürftig gestaltet.

US 2014/263209 A1 und WO 2014/199149 A1 offenbaren jeweils eine additive Fertigungseinrichtung.

Der Erfindung liegt die Aufgabe zugrunde, eine, insbesondere im Hinblick auf eine anlagentechnisch vergleichsweise einfach gestaltete Einrichtung zur Erzeugung eines Laserstrahls, verbesserte Vorrichtung zur generativen Herstellung eines dreidimensionalen Objekts anzugeben.

Die Aufgabe wird durch eine Vorrichtung gemäß Anspruch 1 gelöst. Die abhängigen Ansprüche betreffen besondere Ausführungsformen der Vorrichtung. Die Aufgabe wird ferner durch ein Verfahren gemäß Anspruch 21 gelöst.

Die Erfindung ist durch die beigefügten Ansprüche beschrieben. Die hierin beschriebene Vorrichtung dient im Allgemeinen der additiven bzw. generativen Herstellung wenigstens eines dreidimensionalen Objekts, d. h. beispielsweise eines technischen Bauteils bzw. einer technischen Bauteilgruppe, durch sukzessives schichtweises selektives Verfestigen einzelner Baumaterialschichten aus einem verfestigbaren Baumaterial vermittels wenigstens eines von wenigstens einer Einrichtung erzeugten Laserstrahls. Bei der Vorrichtung kann es sich um eine Vorrichtung zur Durchführung selektiver Laserschmelzverfahren oder selektiver Lasersinterverfahren handeln.

Die sukzessive schichtweise selektive Verfestigung einer zu verfestigenden Baumaterialschicht erfolgt auf Grundlage von objektbezogenen Baudaten. Entsprechende Baudaten beschreiben im Allgemeinen die geometrische bzw. geometrisch-konstruktive Gestalt des jeweils generativ herzustellenden dreidimensionalen Objekts (im Weiteren abgekürzt als "Objekt" bezeichnet). Entsprechende Baudaten können beispielsweise CAD-Daten des herzustellenden Objekts sein bzw. solche beinhalten.

Die Vorrichtung umfasst die typischerweise erforderlichen Funktionskomponenten zur Durchführung generativer Bauprozesse, d. h. insbesondere eine kurz als "Einrichtung" bezeichnete Laserstrahlerzeugungseinrichtung zur Erzeugung eines Laserstrahls zur sukzessiven schichtweisen selektiven Verfestigung einzelner Baumaterialschichten aus einem Baumaterial, d. h. insbesondere einem pulverförmigen Metall-, Kunststoff- und/oder Keramikmaterial, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Trägerelements einer Trägereinrichtung oder um eine bereits verfestigte Baumaterialschicht handeln. Im Allgemeinen sind in einer Bauebene selektiv zu verfestigende bzw. selektiv verfestigte Baumaterialschichten ausgebildet.

Die Einrichtung umfasst mehrere, direkt über der Bauebene anordenbare bzw. angeordnete Laserdiodenelemente, welche zur Erzeugung eines direkt auf die Bauebene gerichteten Laserstrahls eingerichtet sind. Die Laserdiodenelemente sind hier typischerweise innerhalb einer der Vorrichtung zugehörigen Bau- oder Prozesskammer, in welcher generative Bauvorgänge durchgeführt werden, angeordnet.

Ergänzend, kann die Einrichtung wenigstens ein, d. h. typischerweise mehrere, mit wenigstens einem Laserdiodenelement (optisch) gekoppeltes, direkt über der Bauebene anordenbare(s) bzw. angeordnete(s) optisches Element, welche(s) zur Ablenkung eines von dem Laserdiodenelement erzeugten Laserstrahls direkt auf die Bauebene eingerichtet ist, umfassen. Das oder die Laserdiodenelemente sind hier typischerweise außerhalb einer der Vorrichtung zugehörigen Bau- oder Prozesskammer, in welcher generative Bauvorgänge durchgeführt werden, angeordnet. Ein optisches Element kann als eine ein oder mehrere optische Linsenelemente umfassende Fokussieroptik zur Fokussierung eines Laserstrahls auf die Bauebene ausgebildet sein oder wenigstens eine solche umfassen. Die (optische) Kopplung zwischen einem optischen Element und einem Laserdiodenelement erfolgt über einen Lichtleitelement, z. B. in Form eines oder mehrerer Glasfaserkabel(s). Selbstverständlich ist es möglich, wenigstens ein optisches Element mit mehreren Laserdiodenelementen zu koppeln oder wenigstens ein Laserdiodenelement über geeignete Strahlteilungselemente mit mehreren optischen Elementen zu koppeln.

Unabhängig von der Anordnung der Laserdiodenelemente und der entsprechenden Vorsehung von gekoppelten optischen Elementen, treffen über die Einrichtung erzeugte Laserstrahlen typischerweise unter einem Winkel von ca. 90° bezüglich der Bauebenenebene auf die Bauebene auf. Die Einrichtung kann insofern als "Diodenlaser" bezeichnet bzw. erachtet werden, da sie zur Erzeugung von Laserstrahlen bzw. LaserstrahlungLaserdiodenelemente umfasst. Unter einem Laserdiodenelement ist ein zur Erzeugung von Laserstrahlung eingerichtetes Halbleiterelement zu verstehen. Die Eigenschaften, d. h. insbesondere die optischen Eigenschaften, d. h. z. B. die Wellenlänge, des über ein Laserdiodenelement erzeugbaren Laserstrahls sind u. a. von dem oder den eingesetzten Halbleitermaterial(ien) abhängig. Die der Einrichtung zugehörigen Laserdiodenelemente können beispielsweise emittierte Laserleistungen im Bereich zwischen 0,1 und 10 Watt erzeugen; selbstverständlich sind hier Ausnahmen nach oben und/oder unten denkbar.

Die der Einrichtung zugehörigen Laserdiodenelemente bzw. optischen Elemente sind direkt über der Bauebene angeordnet; zwischen den Laserdiodenelementen bzw. optischen Elemente und der Bauebene befindet sich typischerweise kein weiteres Bauteil, insbesondere kein optisches Maskenbauteil. Entsprechend sind die Laserstrahlen direkt auf die Bauebene gerichtet und treffen direkt auf die Bauebene. Es ist nicht notwendig, die Laserstrahlen über eine Strahlablenkeinrichtung abzulenken.

Insgesamt bietet die hierin beschriebene Vorrichtung zur generativen Herstellung dreidimensionale Objekte einen anlagentechnisch vereinfachten Aufbau; somit liegt eine verbesserte Vorrichtung zur generativen Herstellung dreidimensionaler Objekte vor.

Die Einrichtung umfasst, wie erwähnt, mehrere, d. h. eine Mehrzahl, an Laserdiodenelementen bzw. optischen Elementen. Die Laserdiodenelemente bzw. optischen Elemente können wenigstens einen Teil der Bauebene, gegebenenfalls auch die vollständige Bauebene, flächenmäßig abdecken. Die Bauebene lässt sich typischerweise durch eine bestimmte, beispielsweise viereckige, Fläche definieren. Die Laserdiodenelemente bzw. optischen Elemente liegen sonach wenigstens einem Teil, d. h. einer Teil(ober)fläche der Gesamt(ober)fläche, der Bauebene direkt gegenüber. Selbstverständlich ist es auch möglich, dass die Laserdiodenelemente bzw. optischen Elemente mehreren flächenmäßig zusammenhängenden oder nicht zusammenhängenden Teilen bzw. Teilflächen der Bauebene gegenüber liegen. Ein über entsprechende Laserdiodenelemente bzw. optischen Elemente flächenmäßig abgedeckter Teil der Bauebene lässt sich ohne eine zwingend notwendige mechanische Bewegung der Laserdiodenelemente bzw. optischen Elemente relativ zu der Bauebene selektiv belichten. Die selektive Belichtung erfolgt durch eine gezielte Ansteuerung einzelner, mehrerer oder sämtlicher Laserdiodenelemente zur jeweiligen Erzeugung eines Laserstrahls bestimmter Strahleigenschaften.

Insofern kann es zweckmäßig sein, dass die Laserdiodenelemente bzw. optischen Elemente die Bauebene vollständig flächenmäßig abdecken, sodass prinzipiell jeder Teil bzw. die Gesamtfläche der Bauebene bedarfsweise ohne eine Bewegung der Einrichtung relativ zu der Bauebene selektiv belichtet werden kann. Dies stellt einen besonderen Vorteil gegenüber konventionellen Vorrichtungen dar, welche zur selektiven Belichtung einer Bauebene typischerweise eine Strahlablenkungseinrichtung zur Ablenkung eines erzeugten Laserstahls und/oder eine Bewegungsmechanik zur Bewegung einer Laserstrahlerzeugungseinrichtung umfassen. Diese Einrichtungen bzw. die diesen zugehörigen Mechaniken konventioneller Vorrichtungen waren konstruktiv aufwändig gestaltet und mitunter im Hinblick auf die Realisierung hochgenauer Belichtungsvorgänge problematisch. Vorteilhaft gegenüber konventionellen Vorrichtungen ist ferner, dass auf die Bewegung einer Laserstrahlerzeugungseinrichtung zurückzuführende "Leerzeiten" der Vorrichtung reduziert bzw. vermieden werden können.

Die Laserdiodenelemente bzw. optischen Elemente der Einrichtung sind grundsätzlich in beliebigen räumlichen Anordnungen relativ zueinander anordenbar bzw. angeordnet. Die Laserdiodenelemente bzw. mehrere Laserdiodenelemente im Sinne einer Teilmenge einer vorrichtungsbezogen insgesamt vorhandenen Anzahl an Laserdiodenelementen respektive die bzw. optischen Elemente bzw. mehrere bzw. optischen Elemente im Sinne einer Teilmenge einer vorrichtungsbezogen insgesamt vorhandenen Anzahl an bzw. optischen Elementen können reihen- und/oder spaltenartig in wenigstens einer gemeinsamen (typischerweise parallel zu der Bauebene liegenden) Ebene angeordnet sein. Eine Anordnung von Laserdiodenelementen bzw. optischen Elementen in zusammenhängenden Reihen und Spalten kann als "matrixartige Anordnung", kurz als "Matrix" bezeichnet werden. Eine Matrix umfasst sonach wenigstens eine Reihe, typischerweise mehrere parallel angeordnete Reihen, aus (jeweils) wenigstens zwei Laserdiodenelementen bzw. optischen Elementen und wenigstens eine Spalte, typischerweise mehrere parallel angeordnete Spalten aus (jeweils) wenigstens zwei Laserdiodenelementen bzw. optischen Elementen. Eine entsprechende Spalte an Laserdiodenelementen bzw. optischen Elementen erstreckt sich winklig, insbesondere lotrecht, zu einer entsprechenden Reihe an Laserdiodenelementen bzw. optischen Elementen und umgekehrt. Eine matrixartige Anordnung von Laserdiodenelementen bzw. optischen Elementen kann einem Pixel-Raster, wie es beispielsweise bei Flüssigkristallanzeigeeinrichtungen ("LCD-Displays") vorgesehen ist, entsprechen; die einzelnen Laserdiodenelemente bzw. optischen Elemente entsprechen dabei den Pixeln entsprechender Flüssigkristallanzeigeeinrichtungen.

An dieser Stelle ist anzumerken, dass Laserdiodenelemente - wiederum entsprechend dem Prinzip einer Flüssigkristallanzeigeeinrichtung - grundsätzlich einzeln oder in Gruppen zur jeweiligen Erzeugung eines Laserstrahls mit bestimmten Strahleigenschaften ansteuerbar, d. h. insbesondere aktivierbar und/oder deaktivierbar, sein können. Unter einer Aktivierung bzw. Deaktivierung eines Laserdiodenelements kann eine Bestromung des Laserdiodenelements zu verstehen sein; das Laserdiodenelement ist in einem aktivierten Zustand bestromt und erzeugt einen Laserstrahl und in einem deaktivierten Zustand nicht bestromt und erzeugt keinen Laserstrahl. Unter einer Aktivierung bzw. Deaktivierung eines Laserdiodenelements kann auch zu verstehen sein, dass der über das Laserdiodenelement erzeugbare bzw. erzeugte Laserstrahl, z. B. durch Bewegen, insbesondere Verschwenken, des Laserdiodenelements, in einem aktivierten Zustand des Laserdiodenelements auf die Bauebene gerichtet und in einem deaktivierten Zustand des Laserdiodenelements von der Bauebene weg gerichtet ist. In analoger Weise können auch optische Elemente auf die Bauebene gerichtet und von der Bauebene weg gerichtet sein.

De Laserdiodenelemente bzw. mehrere Laserdiodenelemente im Sinne einer Teilmenge einer vorrichtungsbezogen insgesamt vorhandenen Anzahl an Laserdiodenelementen respektive die optischen Elemente bzw. mehrere optische Elemente im Sinne einer Teilmenge einer vorrichtungsbezogen insgesamt vorhandenen Anzahl an optischen Elementen sind in mehreren (typischerweise parallel zu der Bauebene liegenden) Ebenen übereinander angeordnet. Eine Anordnung von Laserdiodenelementen bzw. optischen Elementen in mehreren Ebenen übereinander ergibt eine besonders kompakte, gegebenenfalls ineinander verschachtelte, Anordnung entsprechender Laserdiodenelemente bzw. optischer Elemente. Selbstverständlich ist die Anordnung der Laserdiodenelemente bzw. optischen Elemente in mehreren Ebenen übereinander so gewählt, dass die Laserstrahlen jeweils direkt auf die Bauebene gerichtet werden können. Die in jeweiligen übereinander liegenden Ebenen angeordneten Laserdiodenelemente bzw. optischen Elemente sind in einem bestimmten räumlichen Versatz relativ zueinander angeordnet. Der von einem in einer oberen Ebene angeordneten Laserdiodenelement erzeugte Laserstrahl trifft also nicht auf ein in einer unteren Ebene angeordnetes Element, sondern tritt durch einen Freiraum, z. B. in Form eines Spalts, einer Bohrung oder einer sonstigen Öffnung, zwischen in einer unteren Ebene unmittelbar benachbart angeordneten Laserdiodenelementen und/oder optischen Elementen auf die Bauebene. In analoger Weise trifft der einem in einer oberen Ebene angeordneten optischen Element abgelenkte Laserstrahl nicht auf ein in einer unteren Ebene angeordnetes Element, sondern tritt durch einen Freiraum, z. B. in Form eines Spalts, einer Bohrung oder einer sonstigen Öffnung, zwischen in einer unteren Ebene unmittelbar benachbart angeordneten Laserdiodenelementen und/oder optischen Elementen auf die Bauebene.

Unabhängig von der Anordnung von Laserdiodenelementen bzw. optischen Elementen in einer oder mehreren übereinander liegenden Ebenen, können die Laserdiodenelemente bzw. mehrere Laserdiodenelemente im Sinne einer Teilmenge einer vorrichtungsbezogen insgesamt vorhandenen Anzahl an Laserdiodenelementen respektive die optischen Elemente bzw. mehrere optische Elemente im Sinne einer Teilmenge einer vorrichtungsbezogen insgesamt vorhandenen Anzahl an optischen Elementen im Hinblick auf eine, gegebenenfalls querschnittsbezogene, Außen- und/oder Innenkontur eines herzustellenden Objekts anordenbar oder angeordnet sein. Der erwähnte Aspekt der grundsätzlich beliebigen räumlichen Anordnung von Laserdiodenelementen bzw. optischen Elementen relativ zueinander ermöglicht es, Laserdiodenelemente bzw. optische Elemente im Hinblick auf eine bestimmte Außen- und/oder Innenkontur eines herzustellenden Objekts anzuordnen, sodass die Anordnung der Laserdiodenelemente bzw. optischen Elemente eine Belichtung der Außen- und/oder Innenkontur des herzustellenden Objekts ermöglicht. Dies gilt unabhängig von der geometrischen Gestalt des herzustellenden Objekts, da die Laserdiodenelemente bzw. optischen Elemente im Hinblick auf die geometrische Gestalt eines herzustellenden Objekts derart angeordnet sein können, dass diese die, insbesondere querschnittsbezogenen, maximalen bzw. minimalen räumlichen Abmessungen des herzustellenden Objekts abdecken.

Wie sich im Weiteren im Zusammenhang mit einer zweckmäßigen Halteeinrichtung, an oder in welcher Laserdiodenelemente bzw. optische Elemente anordenbar sind, beschrieben wird, ist es möglich, dass Laserdiodenelemente bzw. optische Elemente in im Hinblick auf eine bestimmte Außen- und/oder Innenkontur eines herzustellenden Objekts in einer bestimmten räumlichen Anordnung zueinander vorkonfigurierten Gruppen anordenbar bzw. angeordnet sind. Selbstverständlich kann eine vorkonfigurierte Gruppe auch Laserdiodenelemente und optische Elemente umfassen. Weist ein herzustellendes Objekt z. B. einen dreieckigen Querschnitt auf, weist eine vorkonfigurierte Gruppe an Laserdiodenelementen Laserdiodenelemente in einer entsprechenden dreieckigen Anordnung auf. In analoger Weise weist eine vorkonfigurierte Gruppe an optischen Elementen optische Elemente in einer entsprechenden dreieckigen Anordnung. Da in einem generativen Bauvorgang mehrere Objekte geometrisch unterschiedlicher Gestalt hergestellt werden können, können selbstverständlich auch mehrere unterschiedlich vorkonfigurierte Gruppen an Laserdiodenelementen bzw. optischen Elementen vorhanden sein.

Einzelne, mehrere oder sämtliche Laserdiodenelemente können in wenigstens einem die Strahleigenschaften des über dieses erzeugbaren Laserstrahls betreffenden Parameter, insbesondere in ihrer Eingangs- und/oder Ausgangsleistung, variierbar sein. Einzelne, mehrere oder sämtliche Laserdiodenelemente können sonach anlog einer dimmbaren LED "dimmbar" sein. Entsprechend lassen sich über ein in wenigstens einem die Strahleigenschaften betreffenden Parameter variierbares Laserdiodenelement, z. B. durch Variation der Eingangs- und/oder Ausgangsleistung, Laserstrahlen mit unterschiedlichen Strahleigenschaften, d. h. z. B. unterschiedlicher Energiedichte, Intensität, etc., erzeugen. Für den Fall mehrerer entsprechend in wenigstens einem die Strahleigenschaften betreffenden Parameter variierbarer Laserdiodenelemente lassen sich sonach bei simultaner Erzeugung mehrerer Laserstrahlen bestimmte Gesamtstrahlenergieprofile ausbilden. Beispielsweise sei an eine reihenartige Anordnung mehrerer Laserdiodenelemente bzw. optischer Elemente zu denken, wobei die Laserdiodenelemente derart angesteuert bzw. in ihrer Ausgangsleistung variiert werden, dass sich ein Gesamtstrahlenergieprofil mit einer bestimmten geometrischen Form ergibt; für ein gaußförmiges Gesamtstrahlenergieprofil werden mittig angeordnete Laserdiodenelemente bzw. optische Elemente im Vergleich zu randseitig angeordneten Laserdiodenelementen bzw. optischen Elemente mit einer höheren Leistung versorgt. Selbstverständlich ist ein gaußförmiges Gesamtstrahlenergieprofil nur beispielhaft zu verstehen, grundsätzlich sind über eine entsprechende Ansteuerung der Laserdiodenelemente Gesamtstrahlenergieprofile beliebiger zwei- oder dreidimensionaler geometrischer Gestalt erzeugbar.

Eine reihen- oder spaltenartige Anordnung mehrerer in wenigstens einem die Stahleigenschaften des über diese erzeugbaren Laserstrahls betreffenden Parameter variierbarer Laserdiodenelemente bzw. mit solchen Laserdiodenelementen gekoppelter optischer Elemente ermöglicht es ferner, dass die Laserdiodenelemente derart angesteuert bzw. in ihrer Ausgangsleistung variiert werden können, dass sich ein entsprechend einer Wellenfront entlang der reihen- oder spaltenartigen Anordnung der Laserdiodenelemente bzw. optischen Elemente. entlang der Bauebene, gegebenenfalls hin und her, bewegbares bzw. bewegendes, mithin ein dynamisches Gesamtstrahlenergieprofil ergibt. Hierzu werden die Laserdiodenelemente analog einer mehrere LEDs umfassenden LED-Anzeige zur bewegten Anzeige von alphanumerischen Symbolen angesteuert. Die Laserdiodenelemente bzw. optischen Elemente entsprechen den der LED-Anzeige zugehörigen LEDs. Das Gesamtstrahlenergieprofil kann durch eine wie beschriebene Ansteuerung der Laserdiodenelemente eine bestimmte geometrische Form aufweisen, d. h. z. B. gaußförmig, ausgestaltet sein.

Die Prinzipien lassen sich selbstverständlich auch auf eine matrixartige Anordnung mehrerer Laserdiodenelemente bzw. optischer Elemente übertragen. Hierbei können unbewegte oder bewegte Gesamtstrahlenergieprofile mit zumindest abschnittsweise gleichen, ähnlichen oder unterschiedlichen Querschnittsprofilen, im Allgemeinen Gesamtstrahlenergieprofile beliebiger dreidimensionaler geometrischer Gestalt realisiert werden.

Im Allgemeinen können sich einzelne, mehrere oder sämtliche Laserdiodenelemente in wenigstens einem die Strahleigenschaften des über diese jeweils erzeugbaren Laserstrahls betreffenden Parameter unterscheiden. Die Ausbildung bestimmter zwei- oder dreidimensionaler Gesamtstrahlenergieprofile mit zumindest abschnittsweise gleichen, ähnlichen oder unterschiedlichen Querschnittsprofilen lässt sich sonach auch durch Laserdiodenelemente realisieren, welche sich in wenigstens einem die Strahleigenschaften des über diese jeweils erzeugbaren Laserstrahls betreffenden Parameter, d. h. z. B. in ihrer Eingangs- und/oder Ausgangsleistung, unterscheiden. Beispielsweise sei wiederum an eine reihen- oder spaltenartige Anordnung mehrerer Laserdiodenelemente zu denken, welche sich in wenigstens einem die Strahleigenschaften des über diese jeweils erzeugbaren Laserstrahls betreffenden Parameter unterscheiden, wobei die Laserdiodenelemente derart angeordnet sind, dass sich ein bestimmtes Gesamtstrahlenergieprofil mit einer bestimmten geometrischen Form ergibt; bei einem gaußförmigen Gesamtstrahlenergieprofil weisen mittig angeordnete Laserdiodenelemente im Vergleich zu randseitig angeordneten Laserdiodenelementen z. B. eine höhere Ausgangsleistung auf. Selbstverständlich ist ein gaußförmiges Gesamtstrahlenergieprofil auch hier nur beispielhaft zu verstehen, grundsätzlich sind auch über eine entsprechende Anordnung sich in wenigstens einem die Strahleigenschaften des über diese jeweils erzeugbaren Laserstrahls betreffenden Parameter unterscheidender Laserdiodenelemente Gesamtstrahlenergieprofile beliebiger zweidimensionaler geometrischer Gestalt erzeugbar. Analoges gilt selbstverständlich für eine reihen- oder spaltenartige Anordnung mehrerer optischer Elemente.

Über entsprechend unterschiedliche Laserdiodenelemente erzeugbare Laserstrahlen lassen sich auch unterschiedliche Funktionen, d. h. insbesondere eine Vortemperierung (noch) zu verfestigender Baumaterialschichten und/oder eine Nachtemperierung bereits verfestigter Baumaterialschichten realisieren. Beispielsweise kann wenigstens ein erstes Laserdiodenelement, gegebenenfalls auch eine Gruppe erster Laserdiodenelemente, zur Erzeugung eines Laserstrahls zur Verfestigung von zu verfestigenden Baumaterialschichten eingerichtet sein und wenigstens ein weiteres Laserdiodenelement, gegebenenfalls auch eine Gruppe weiterer Laserdiodenelemente, zur Erzeugung eines Laserstrahls zur Vortemperierung von zu verfestigenden Baumaterialschichten und/oder zur Erzeugung eines Laserstrahls zur Nachtemperierung von bereits verfestigten Baumaterialschichten eingerichtet sein. Ein zur Verfestigung von Baumaterialschichten erzeugter Laserstrahl weist typischerweise eine höhere Energie(dichte) als ein zur Vor- bzw. Nachtemperierung von zu verfestigenden bzw. bereits verfestigten Baumaterialschichten erzeugter Laserstrahl auf.

Es wurde bereits erwähnt, dass die Laserdiodenelemente bzw. optischen Elemente zweckmäßig an einer Halteeinrichtung anordenbar oder angeordnet sein können. Eine solche, typischerweise rahmenartige, Halteeinrichtung umfasst eine Anzahl an vorbestimmbaren oder vorbestimmten Anordnungspositionen, an oder in welchen wenigstens ein Laserdiodenelement bzw. wenigstens ein optisches Elemente anordenbar ist. Eine solche Halteeinrichtung kann eine beliebige Grundform aufweisen. Die Grundform der Halteeinrichtung ist typischerweise derart bemessen, dass die Halteeinrichtung ohne weiteres in einer Bau- oder Prozesskammer der Vorrichtung anordenbar ist.

Die Laserdiodenelemente bzw. optischen Elemente können in einer solchen Halteeinrichtung an vorbestimmbaren oder vorbestimmten Anordnungspositionen, insbesondere (beschädigungs- bzw. zerstörungsfrei) lösbar, bedarfsweise anordenbar oder angeordnet sein. Eine lösbare Verbindung kann z. B. in dem Fall eines Defekts eines Laserdiodenelements oder eines optischen Elements zweckmäßig sein, da das defekte Laserdiodenelement oder optische Element ohne Weiteres aus der Halteeinrichtung entnommen und ersetzt werden kann.

In diesem Zusammenhang kann eine Erfassungseinrichtung zur Erfassung eines defekten Laserdiodenelements bzw. eines defekten optischen Elements zweckmäßig sein, welche bei einer Erfassung eines defekten Laserdiodenelements bzw. optischen Elements, z. B. akustisch und/oder optisch, eine ein defektes Laserdiodenelement bzw. optisches Element betreffende Information ausgibt. Die Information kann Angaben über technische Spezifikationen, z. B. Typ, des defekten Laserdiodenelements bzw. optischen Elements, die genaue Art des Defekts, die Anordnung bzw. Position des defekten Laserdiodenelements bzw. optischen Elements an oder in der Halteeinrichtung, etc. beinhalten. Weiterhin ist eine mit der Erfassungseinrichtung zusammenwirkende Austauscheinrichtung zum teil- oder vollautomatisierten Austausch defekter Laserdiodenelemente bzw. defekter optischer Elemente denkbar, sodass die Vorrichtung teil- oder vollautomatisiert stets über eine vollständige Anzahl an Laserdiodenelementen bzw. optischen Elementen ausstattbar ist. Eine entsprechende Austauscheinrichtung umfasst eine Anzahl an Greiferelementen zum Greifen von Laserdiodenelementen bzw. optischen Elementen im Rahmen des Austauschs. Die Austauscheinrichtung kann z. B. als ein- oder mehrachsige Robotereinrichtung ausgebildet sein oder wenigstens eine solche umfassen.

Durch die bedarfsweise Anordnung von Laserdiodenelementen bzw. optischen Elementen an vorbestimmbaren bzw. vorbestimmten Anordnungspositionen der Halteeinrichtung ist es möglich, dass Laserdiodenelemente bzw. optische Elemente in im Hinblick auf eine, gegebenenfalls querschnittsbezogene, Außen- und/oder Innenkontur eines herzustellenden Objekts in einer bestimmten räumlichen Anordnung zueinander vorkonfigurierten Gruppen bedarfsweise an vorbestimmbaren oder vorbestimmten Anordnungspositionen der Halteeinrichtung anordenbar oder angeordnet sind. Es ist also im Zusammenhang mit der generativen Herstellung eines Objekts mit einer bestimmten Außen- und/oder Innenkontur möglich, wenigstens eine aus in einer bestimmten räumlichen Anordnung zueinander angeordneten Laserdiodenelementen bzw. bzw. optischen Elementen gebildete vorkonfigurierte Gruppe an Laserdiodenelementen bzw. optischen Elementen vorzubereiten, diese für die Durchführung der generativen Herstellung des Objekts mit der Halteeinrichtung zu verbinden, d. h. z. B. in die Halteeinrichtung einzusetzen, und nach der Herstellung des Objekts aus der Halteeinrichtung zu entnehmen bzw. für eine nachfolgende Herstellung eines anderen Objekts mit einer anderen Außen- und/oder Innenkontur gegen eine im Hinblick auf die Außen- und/oder Innenkontur des anderen Objekts in einer bestimmten räumlichen Anordnung zueinander vorkonfigurierte andere Gruppe an Laserdiodenelementen bzw. optischen Elementen auszutauschen.

Jeweilige vorkonfigurierte Gruppen an Laserdiodenelementen bzw. optischen Elementen sind also grundsätzlich einem Objekt mit einer bestimmten geometrischen Gestalt, d. h. insbesondere mit einer bestimmten Außen- und/oder Innenkontur, zuordenbar bzw. zugeordnet. Jeweilige vorkonfigurierte Gruppen an Laserdiodenelementen bzw. optischen Elementen können unter Beibehaltung der Anordnung der Laserdiodenelemente bzw. optischen Elemente in einem Lager (zwischen)gelagert werden und beliebig oft für die generative Herstellung von diesen jeweils zugeordneten Objekten verwendet werden. Selbstverständlich ist es auch möglich eine vorkonfigurierte Gruppe an Laserdiodenelementen bzw. optischen Elementen im Hinblick auf die geometrische Gestalt eines anderen Objekts durch eine Neuanordnung einzelner, mehrerer oder sämtlicher Laserdiodenelemente bzw. optischer Elemente analog einem Setzkasten umzukonfigurieren ("Setzkastenprinzip").

Zur Anordnung der Laserdiodenelemente an oder in der Halteeinrichtung kann die Halteeinrichtung eine Anzahl an Aufnahmemitteln zur Aufnahme wenigstens eines Laserdiodenelements bzw. optischen Elements umfassen. Die Anzahl an Aufnahmemitteln entspricht typischerweise wenigstens der Anzahl an Laserdiodenelementen bzw. optischen Elementen der Einrichtung. Die Aufnahmemittel können bestimmte Verbindungselemente umfassen, welche mit an den Laserdiodenelementen bzw. optischen Elementen angeordneten oder ausgebildeten korrespondierenden Gegenverbindungselementen unter Ausbildung einer (positions)stabilen, (beschädigungs- bzw. zerstörungsfrei) lösbaren oder unlösbaren Verbindung der Laserdiodenelemente bzw. optischen Elemente mit der Halteeinrichtung zusammenwirken. Über das Zusammenwirken entsprechender Verbindungselemente und entsprechender Gegenverbindungselemente kann z. B. eine form- und/oder kraftschlüssige Verbindung hergestellt werden; die Verbindungselemente können z. B. als Form- und/oder Kraftschlusselemente, d. h. z. B. Steckelemente, wie Steckzapfen oder hierzu korrespondierende Steckaufnahmen, und/oder Rast-/Schnappelemente, wie Rast- /Schnappvorsprünge oder hierzu korrespondierende Ausnehmungen und/oder Schraub- /Gewindeelemente, wie Schraub- oder Gewindebolzen oder hierzu korrespondierende Schraub- oder Gewindeaufnahmen, etc., ausgebildet sein. Die Gegenverbindungselemente können als hierzu korrespondierende Form- und/oder Kraftschlusselemente ausgebildet sein. Selbstverständlich können Laserdiodenelemente bzw. optische Elemente auch stoffschlüssig, d. h. z. B. geklebt, mit der Halteeinrichtung verbunden sein.

Die Halteeinrichtung kann in wenigstens einem Bewegungsfreiheitsgrad relativ zu der Bauebene bewegbar gelagert sein. Die Bewegung der Halteeinrichtung erfolgt über eine geeignete, d. h. insbesondere (elektro)motorische, mit diesen koppelbare oder gekoppelte Antriebs- und/oder Führungseinrichtung. Über die Bewegung der Haltereinrichtung ist es möglich, die Halteeinrichtung nebst daran oder darin angeordneten Laserdiodenelementen bzw. optischen Elementen im Hinblick auf eine konkrete Belichtungssituation relativ zu der zu belichtenden Bauebene zu bewegen. Die Bewegung der Halteeinrichtung kann translatorische Bewegungsfreiheitsgrade entlang wenigstens einer Translationsachse und/oder rotatorische Bewegungsfreiheitsgrade um wenigstens eine Rotationsachse beinhalten. Bei der Bewegung der Halteeinrichtung kann es sich sonach z. B. um eine Linear-, Dreh-, Kipp- oder Schwenkbewegung handeln. Selbstverständlich sind kombinierte Bewegungen in mehreren unterschiedlichen Bewegungsfreiheitsgraden möglich.

Die Bewegung der Halteeinrichtung kann simultan mit der Belichtung der Bauebene erfolgen. Die Halteeinrichtung kann im Zusammenhang mit der Belichtung der Bauebene auch in unterschiedlichen Bewegungsfreiheitsgraden bzw. in unterschiedlichen Bewegungsbahnen relativ zu der Bauebene bewegt werden. Derart können unterschiedliche Verfestigungsstrukturen, d. h. z. B. Schweißnähte, in der zu verfestigenden Baumaterialschicht ausgebildet werden. So können prozessbedingt entstehende Eigenspannungen in dem herzustellenden Objekt reduziert werden, was sich positiv auf die Qualität des herzustellenden Objekts auswirkt. Für das Beispiel einer Halteeinrichtung mit daran oder darin in einer reihen- oder spaltenartigen Anordnung angeordneten Laserdiodenelementen bzw. optischen Elementen kann die Halteeinrichtung zunächst z. B. entlang einer durch eine erste, z. B. lineare, Bewegungsachse definierten ersten Bewegungsbahn über die Bauebene und nachfolgend entlang einer durch eine weitere, z. B. lineare, Bewegungsachse definierten weiteren Bewegungsbahn über die Bauebene bewegt werden. Die weitere Bewegungsbahn kann z. B. winklig, insbesondere orthogonal, zu der ersten Bewegungsbahn verlaufen. Entsprechendes lässt sich selbstverständlich auch auf anders, d. h. z. B. matrixartig, angeordnete Laserdiodenelemente bzw. optische Elemente übertragen.

Für den Fall, in dem die Halteeinrichtung nicht relativ zu der Bauebene bewegbar gelagert ist, umfasst die Einrichtung zweckmäßig eine Mehrzahl an Laserdiodenelementen bzw. optischen Elementen, welche wenigstens einen Teil bzw. eine Teilfläche der Bauebene, insbesondere die vollständige, Bauebene flächenmäßig abdecken. Insbesondere bei einer flächenmäßig vollständigen Abdeckung der Bauebene durch eine entsprechende flächenmäßig korrespondierende Anordnung von Laserdiodenelementen bzw. optischen Elementen ist es nicht notwendig, die Halteeinrichtung nebst daran oder darin angeordneten Laserdiodenelementen bzw. optischen Elementen im Hinblick auf eine konkrete Belichtungssituation relativ zu der Bauebene zu bewegen. Es sind hier keine mit der Halteeinrichtung koppelbaren oder gekoppelten Antriebs- und/oder Führungseinrichtungen vorzusehen, welche den anlagen- bzw. steuerungstechnischen Aufbau der Vorrichtung gegebenenfalls erhöhen.

Unabhängig von der bewegbaren oder nicht bewegbaren Lagerung der Halteeinrichtung relativ zu der Bauebene kann (auch) wenigstens ein Laserdiodenelement bzw. wenigstens ein optisches Element in wenigstens einem Bewegungsfreiheitsgrad relativ zu der Halteeinrichtung und somit auch relativ zu der Bauebene bewegbar an oder in der Halteeinrichtung anordenbar oder angeordnet sein. Über die Bewegung einzelner, mehrerer oder sämtlicher Laserdiodenelemente bzw. optischer Elemente relativ zu der Halteeinrichtung ist es z. B. möglich, die Laserdiodenelemente bzw. optischen Elemente im Hinblick auf eine konkrete Belichtungssituation relativ zu der Bauebene zu bewegen. Ebenso ist es möglich, einzelne, mehrere oder sämtliche Laserdiodenelemente bzw. optischen Elemente in einen deaktivierten Zustand, in welchem ein jeweiliger erzeugbarer bzw. erzeugter Laserstrahl von der Bauebene weg gerichtet ist, zu bewegen, d. h. insbesondere zu verkippen bzw. zu verschwenken. Die Bewegung eines Laserdiodenelements bzw. eines optischen Elements kann translatorische Bewegungsfreiheitsgrade entlang wenigstens einer Translationsachse und/oder rotatorische Bewegungsfreiheitsgrade um wenigstens eine Rotationsachse beinhalten. Bei der Bewegung eines Laserdiodenelements bzw. eines optischen Elements kann es sich sonach z. B. um eine Linear-, Dreh-, Kipp- oder Schwenkbewegung handeln. Selbstverständlich sind auch hier kombinierte Bewegungen in mehreren unterschiedlichen Bewegungsfreiheitsgraden möglich.

Auch die Bewegung der Laserdiodenelemente bzw. optischen Elemente kann simultan mit der Belichtung der Bauebene erfolgen. Einzelne, mehrere oder sämtliche Laserdiodenelemente bzw. optischen Elemente können im Zusammenhang mit der Belichtung einer bestimmten Bauebene auch in unterschiedlichen Bewegungsfreiheitsgraden bzw. in unterschiedlichen Bewegungsbahnen relativ zu der Bauebene bewegt werden. Auch derart können unterschiedliche Verfestigungsstrukturen, d. h. z. B. Schweißnähte, in der zu verfestigenden Baumaterialschicht ausgebildet werden. So können prozessbedingt entstehende Eigenspannungen in dem herzustellenden Objekt reduziert werden, was sich positiv auf die Qualität des herzustellenden Objekts auswirkt. Einzelne, mehrere oder sämtliche Laserdiodenelemente bzw. optischen Elemente können zunächst z. B. entlang einer durch eine erste, z. B. lineare, Bewegungsachse definierten ersten Bewegungsbahn über eine Bauebene und nachfolgend entlang einer durch weitere, z. B. lineare, Bewegungsachse definierten weiteren Bewegungsbahn über die Bauebene bewegt werden. Die weitere Bewegungsbahn kann z. B. winklig, insbesondere orthogonal, zu der ersten Bewegungsbahn verlaufen.

An der Halteeinrichtung kann eine der Vorrichtung typischerweise zugehörige Beschichtereinrichtung zur Ausbildung einer zu verfestigenden Baumaterialschicht angeordnet oder ausgebildet sein. Es handelt sich hierbei um eine besonders kompakte Möglichkeit der Integration einer Beschichtereinrichtung in die Vorrichtung. Zur Ausbildung einer Baumaterialschicht kann die an der Halteeinrichtung angeordnete oder ausgebildete Beschichtereinrichtung z. B. samt der bewegbar gelagerten Halteeinrichtung relativ zu der Bauebene bewegt werden.

Zweckmäßig kann auch die Beschichtereinrichtung in wenigstens einem Bewegungsfreiheitsgrad bewegbar relativ zu der Halteeinrichtung an der Halteeinrichtung angeordnet oder ausgebildet sein. Zur Bewegung der Beschichtereinrichtung relativ zu der Halteeinrichtung und somit auch relativ zu der Bauebene können mit der Beschichtereinrichtung koppelbare oder gekoppelte, insbesondere (elektro)motorische, Antriebs- und/oder Führungseinrichtungen vorgesehen sein. Insbesondere in diesem Fall ist es möglich, Beschichtungsvorgänge und Belichtungsvorgänge simultan durchzuführen; zweckmäßig werden hierbei nur Teile der Bauebene belichtet, in welchen durch die Beschichtereinrichtung bereits eine Baumaterialschicht ausgebildet wurde.

Die Vorrichtung kann eine Erfassungseinrichtung zur Erfassung der Temperatur und/oder der Schmelz(pool)charakteristik einer zu verfestigenden, einer sich gerade verfestigenden oder einer bereits fertig verfestigten Baumaterialschicht umfassen. Die Erfassungseinrichtung kann als Pyrometer ausgebildet sein oder wenigstens ein solches umfassen. Auch die Erfassungseinrichtung kann an der Halteeinrichtung angeordnet oder ausgebildet sein. Es handelt sich hierbei um eine besonders kompakte Möglichkeit der Integration einer entsprechenden Erfassungseinrichtung in die Vorrichtung. Die über die Erfassungseinrichtung erfassten Temperaturwerte bzw. Schmelz(pool)charakteristika können einer Vortemperierung einer zu verfestigenden Baumaterialschicht bzw. einer Nachtemperierung einer bereits verfestigten Baumaterialschicht zugrunde gelegt werden.

Zweckmäßig kann auch die Erfassungseinrichtung in wenigstens einem Bewegungsfreiheitsgrad bewegbar relativ zu der Halteeinrichtung an der Halteeinrichtung angeordnet oder ausgebildet sein. Zur Bewegung der Erfassungseinrichtung relativ zu der Halteeinrichtung und somit auch relativ zu der Bauebene können mit der Erfassungseinrichtung koppelbare oder gekoppelte, insbesondere (elektro)motorische, Antriebs- und/oder Führungseinrichtungen vorgesehen sein. Insbesondere in diesem Fall ist es möglich, Erfassungsvorgänge und Belichtungsvorgänge simultan durchzuführen; hierbei können Teile der Bauebene belichtet werden, welche noch zu verfestigen oder bereits verfestigt sind. Die Belichtungsparameter können in Abhängigkeit der erfassten Temperatur bzw. Schmelz(pool)charakteristik eingestellt werden.

Die Vorrichtung kann ferner wenigstens eine Auswerteeinrichtung zur, insbesondere optischen, Auswertung der Oberflächenqualität und/oder der Schmelz(pool)charakteristik einer zu verfestigenden, einer sich gerade verfestigenden und/oder einer (bereits) verfestigten Baumaterialschicht umfassen. Die Auswerteeinrichtung kann als eine Kamera ausgebildet sein oder wenigstens eine solche umfassen. Auch die Auswerteeinrichtung kann, insbesondere in wenigstens einem Bewegungsfreiheitsgrad relativ zu der Halteeinrichtung bewegbar, an oder in der Halteeinrichtung anordenbar oder angeordnet sein. Insbesondere in diesem Fall ist es möglich, Beschichtungsvorgänge, Belichtungsvorgänge und Auswertevorgänge simultan durchzuführen; zweckmäßig werden zweckmäßig hierbei nur Teile der Bauebene ausgewertet, in welchen bereits eine Baumaterialschicht ausgebildet und belichtet wurde.

Die Halteeinrichtung kann mehrere Halteeinrichtungssegmente umfassen, wobei wenigstens zwei Halteeinrichtungssegmente in wenigstens einem Bewegungsfreiheitsgrad relativ zu der Bauebene und/oder in wenigstens einem Bewegungsfreiheitsgrad relativ zueinander bewegbar angeordnet sind. Die Bewegung der Halteeinrichtungssegmente kann translatorische Bewegungsfreiheitsgrade entlang wenigstens einer Translationsachse und/oder rotatorische Bewegungsfreiheitsgrade um wenigstens eine Rotationsachse beinhalten. Bei der Bewegung eines Halteeinrichtungssegments kann es sich sonach z. B. um eine Linear-, Dreh-, Kipp- oder Schwenkbewegung relativ zu der Bauebene und/oder relativ zu wenigstens einem weiteren Halteeinrichtungssegment handeln. Die Bewegung von Halteeinrichtungssegmenten in wenigstens einem Bewegungsfreiheitsgrad relativ zu der Bauebene und/oder in wenigstens einem Bewegungsfreiheitsgrad relativ zueinander kann alternativ oder ergänzend zu einer Bewegung der gesamten Halteeinrichtung relativ zu der Bauebene erfolgen.

An wenigstens einem ersten Halteeinrichtungssegment ist typischerweise eine Anzahl an Laserdiodenelementen bzw. optischen Elementen, z. B. in einer reihen- und/oder spaltenartigen Anordnung, zur Belichtung einer zu verfestigenden Baumaterialschicht angeordnet. An wenigstens einem weiteren Halteeinrichtungssegment kann eine weitere Anzahl an Laserdiodenelementen bzw. optischen Elementen zur Vortemperierung einer zu verfestigenden Baumaterialschicht und/oder zur Nachtemperierung einer bereits verfestigten Baumaterialschicht angeordnet sein. Alternativ oder ergänzend kann an wenigstens einem weiteren Halteeinrichtungssegment wenigstens eine weitere Funktionskomponente der Vorrichtung angeordnet sein. Bei einer solchen weiteren Funktionskomponente kann es sich z. B. um eine Aufbring- bzw. Dosiereinrichtung zur Aufbringung einer bestimmten Menge an Baumaterial auf eine Bauebene, eine Beschichtereinrichtung zur Ausbildung einer zu verfestigenden Baumaterialschicht, eine Auswerteeinrichtung zur, insbesondere optischen, Auswertung der Oberflächenqualität bzw. der Schmelz(pool)charakteristik einer zu verfestigenden, einer sich (gerade) verfestigenden und/oder einer verfestigten Baumaterialschicht, eine Erfassungseinrichtung zur Erfassung der Temperatur und/oder der Schmelz(pool)charakteristik einer zu verfestigenden, einer sich (gerade) verfestigenden oder einer bereits verfestigten Baumaterialschicht, etc. handeln.

Ein konkretes Beispiel einer mehrere Halteeinrichtungssegmente umfassenden Halteeinrichtung umfasst vier, z. B. kreuzartig, angeordnete Halteeinrichtungssegmente, welche einzeln, gruppenweise oder insgesamt relativ zu der Bauebene und/oder einzeln oder gruppenweise relativ zueinander bewegbar sind. An einem ersten Halteeinrichtungssegment kann eine Aufbring- bzw. Dosiereinrichtung angeordnet sein, an einem zweiten Halteeinrichtungssegment eine Beschichtereinrichtung angeordnet sein, an einem dritten Halteeinrichtungssegment eine Anzahl an Laserdiodenelementen bzw. optischen Elementen zur Belichtung einer zu verfestigenden Baumaterialschicht angeordnet sein und an einem vierten Halteeinrichtungssegment eine Erfassungseinrichtung zur Erfassung der Temperatur und/oder der Schmelz(pool)charakteristik angeordnet sein.

Ein weiteres konkretes Beispiel einer mehrere Halteeinrichtungssegmente umfassenden Halteeinrichtung umfasst sechs, z. B. kreuzartig, angeordnete Halteeinrichtungssegmente, welche einzeln, gruppenweise oder insgesamt relativ zu der Bauebene und/oder einzeln oder gruppenweise relativ zueinander bewegbar sind. An einem ersten Halteeinrichtungssegment kann eine Aufbring- bzw. Dosiereinrichtung angeordnet sein, an einem zweiten Halteeinrichtungssegment eine Beschichtereinrichtung angeordnet sein, an einem dritten Halteeinrichtungssegment eine Erfassungseinrichtung zur Erfassung der Temperatur und/oder der Schmelz(pool)charakteristik, an einem vierten Halteeinrichtungssegment eine Anzahl an Laserdiodenelementen bzw. optischen Elementen zur Belichtung einer zu verfestigenden Baumaterialschicht angeordnet sein, an einem fünften Halteeinrichtungssegment eine Erfassungseinrichtung zur Erfassung der Temperatur und/oder der Schmelz(pool)charakteristik und an einem sechsten Halteeinrichtungssegment eine Auswerteeinrichtung zur, insbesondere optischen, Auswertung der Oberflächenqualität und/oder der Schmelz(pool)charakteristik angeordnet sein.

Selbstverständlich können sämtliche in wenigstens einem Bewegungsfreiheitsgrad bewegbar gelagerten Funktionskomponenten der Vorrichtung, d. h. z. B. die Halteeinrichtung bzw. entsprechende Halteeinrichtungssegmente, die Beschichtereinrichtung, die Erfassungseinrichtung, die Auswerteeinrichtung, über eine oder mehrere gemeinsame, insbesondere (elektro)motorische, Antriebs- und/oder Führungseinrichtung(en) bewegbar sein.

Die Vorrichtung kann eine Simulationseinrichtung, welche zur Simulation wenigstens eines im Rahmen der Durchführung eines generativen Bauprozesses veränderlichen objektbezogenen Objektparameters des generativ herzustellenden oder hergestellten Objekts eingerichtet ist, umfassen. Die Simulationseinrichtung kann auf Grundlage bzw. unter Berücksichtigung diverser für den jeweils zu simulierenden Objektparameter relevanten Informationen, wie z. B. Informationen über das im Rahmen der Durchführung des generativen Bauprozesses verwendete Baumaterial, Informationen über diverse Eigenschaften, z. B. Dichte, Geometrie, etc., des generativ herzustellenden bzw. hergestellten Objekts, etc., eine Simulation wenigstens eines sich im Rahmen der Durchführung eines generativen Bauprozesses mit der Vorrichtung veränderlichen objektbezogenen Objektparameters vornehmen. Hierfür kann die z. B. hard- und/oder softwaremäßig implementierte Simulationseinrichtung mit geeigneten Simulationsalgorithmen ausgestattet sein.

Bei einem entsprechenden sich im Rahmen der Durchführung eines generativen Bauprozesses veränderlichen objektbezogenen Objektparameter kann es sich z. B. um den im Rahmen der Durchführung eines generativen Bauprozesses entstehenden Wärmefluss durch das generativ herzustellende oder hergestellte Objekt und/oder um die Temperatur bzw. um die Temperaturverteilung des generativ herzustellenden oder hergestellten Objekts, im Allgemeinen bestimmte thermische Eigenschaften des generativ herzustellenden oder hergestellten Objekts, handeln. Alternativ oder ergänzend ist es auch denkbar, dass es sich bei dem objektbezogenen Objektparameter um im Rahmen der Durchführung eines generativen Bauprozesses gegebenenfalls entstehende mechanische Belastungen, insbesondere Spannungen, in dem generativ herzustellenden oder hergestellten dreidimensionalen Objekt handelt.

Die Vorrichtung umfasst zweckmäßig eine Steuereinrichtung, welche zur gezielten Ansteuerung der Einrichtung, d. h. insbesondere zur gezielten Ansteuerung einzelner, mehrerer oder sämtlicher Laserdiodenelemente zur jeweiligen Erzeugung eines Laserstrahls bestimmter Strahleigenschaften, eingerichtet ist. Die hard- und/oder softwaremäßig implementierte Steuereinrichtung kann sonach entsprechende Steuerungsinformationen erzeugen, auf Grundlage welcher eine gezielte Ansteuerung einzelner, mehrerer oder sämtlicher Laserdiodenelemente zur jeweiligen Erzeugung eines Laserstrahls bestimmter Strahleigenschaften erfolgt. Wie erwähnt, können einzelne, mehrere oder sämtliche Laserdiodenelemente in wenigstens einem die Strahleigenschaften des über diese jeweils erzeugbaren Laserstrahls betreffenden Parameter, insbesondere in ihrer Eingangs- und/oder Ausgangsleistung, variierbar sein. Insbesondere ist es möglich, dass einzelne, mehrere oder sämtliche Laserdiodenelemente anlog einer dimmbaren LED "dimmbar" sind. Entsprechend lassen sich über ein in wenigstens einem die Strahleigenschaften betreffenden Parameter variierbares Laserdiodenelement, z. B. durch Variation der Eingangs- und/oder Ausgangsleistung, Laserstrahlen mit unterschiedlichen Strahleigenschaften, d. h. z. B. unterschiedlicher Energiedichte, Intensität, etc., erzeugen.

Die Steuereinrichtung ist zweckmäßig zur gezielten Ansteuerung einzelner, mehrerer oder sämtlicher Laserdiodenelemente zur jeweiligen Erzeugung eines Laserstrahls bestimmter Strahleigenschaften auf Grundlage des bzw. wenigstens eines durch die Simulationseinrichtung simulierten objektbezogenen Objektparameters eingerichtet. Die Einrichtung kann sonach bei entsprechender Ansteuerung durch die Steuereinrichtung eingerichtet sein, durch entsprechende Ansteuerung einzelner, mehrerer oder sämtlicher Laserdiodenelemente zur jeweiligen Erzeugung eines Laserstrahls bestimmter Strahleigenschaften wenigstens einen entsprechenden objektbezogenen Objektparameter auf einen bestimmten Wert einzustellen bzw. auf einem bestimmten Wert zu halten. Beispielsweise kann die Einrichtung bei entsprechender Ansteuerung durch die Steuereinrichtung eingerichtet sein, durch entsprechende Ansteuerung einzelner, mehrerer oder sämtlicher Laserdiodenelemente zur jeweiligen Erzeugung eines Laserstrahls bestimmter Strahleigenschaften (im Rahmen der Durchführung des generativen Bauprozesses) einen bestimmten Wärmefluss durch das generativ herzustellende oder hergestellte Objekt bzw. eine bestimmte Temperatur(verteilung) in dem generativ herzustellenden oder hergestellten Objekte zu erzeugen und/oder aufrechtzuerhalten. Mit anderen Worten ist es möglich, das Objekt vorher zu simulieren und z. B. dem Wärmefluss entsprechend die einzelnen Dioden leistungsmäßig individuell zu steuern. Derart lassen sich die strukturellen Eigenschaften des herzustellenden bzw. hergestellten Objekts gezielt positiv beeinflussen.

Die Erfindung betrifft ferner ein Verfahren zur generativen Herstellung wenigstens eines dreidimensionalen Objekts durch sukzessive schichtweise selektive Verfestigung einzelner Baumaterialschichten aus verfestigbarem Baumaterial vermittels wenigstens eines Laserstrahls. Bei dem Verfahren kann es sich um ein selektives Laserschmelzverfahren (SLM-Verfahren) oder um ein selektives Lasersinterverfahren (SLS-Verfahren) handeln. Das Verfahren zeichnet sich dadurch aus, dass eine wie beschriebene Vorrichtung zur generativen Herstellung wenigstens eines dreidimensionalen Objekts verwendet wird. Mithin gelten sämtliche Ausführungen im Zusammenhang der Vorrichtung analog für das Verfahren.

Die Erfindung ist anhand von Ausführungsbeispielen in den Zeichnungsfiguren näher erläutert. Dabei zeigen:

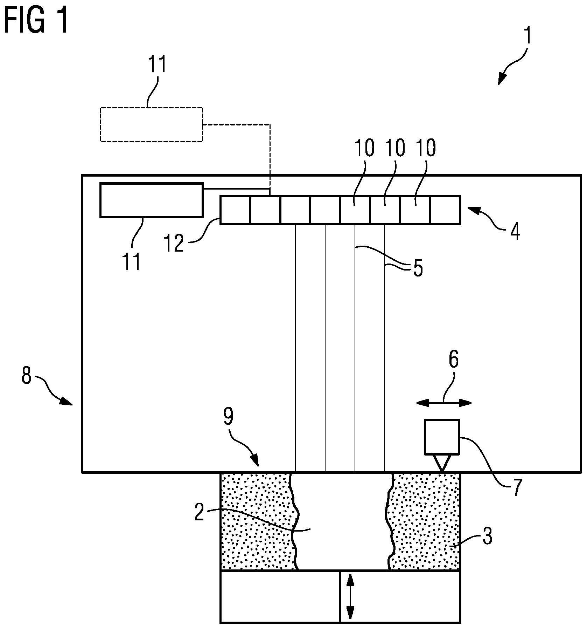

- Fig. 1 - 11: je eine Prinzipdarstellung einer Vorrichtung zur generativen Herstellung eines dreidimensionalen Objekts gemäß einem Ausführungsbeispiel.

Fig. 1 zeigt eine Prinzipdarstellung einer Vorrichtung 1 gemäß einem Ausführungsbeispiel, das nicht in den Schutzbereich der Ansprüche fällt. Die Vorrichtung 1 dient zur generativen Herstellung eines dreidimensionalen Objekts 2, d. h. beispielsweise eines technischen Bauteils bzw. einer technischen Bauteilgruppe, durch sukzessives schichtweises selektives Verfestigen von Baumaterialschichten aus einem verfestigbaren Baumaterial 3 vermittels wenigstens eines von einer Einrichtung 4 (Laserstrahlerzeugungseinrichtung) erzeugten Laserstrahls 5.

Bei dem verfestigbaren Baumaterial 3 kann es sich um ein Metallpulver(gemisch), d. h. z. B. um ein Aluminiumpulver, und/oder um ein Kunststoffpulver(gemisch), d. h. z. B. um ein Polyetheretherketonpulver, und/oder um Keramikpulver(gemisch), d. h. z. B. um ein Aluminiumoxidpulver, handeln.

Jeweilige zu verfestigende Baumaterialschichten werden vermittels einer, wie durch den horizontal ausgerichteten Doppelpfeil 6 angedeutet, bewegbar gelagerten Beschichtereinrichtung 7 in einer Baukammer 8 der Vorrichtung 1 gebildet. In der Baukammer 8 herrscht typischerweise eine Schutzgasatmosphäre, d. h. z. B. eine Argon- oder Stickstoffatmosphäre. Die sukzessive schichtweise selektive Verfestigung jeweiliger zu verfestigender Baumaterialschichten erfolgt derart, dass von der Einrichtung 4 erzeugte Laserstrahlen 5 selektiv auf bestimmte zu verfestigende, jeweiligen schichtbezogenen Querschnittsgeometrien des herzustellenden Objekts 2 entsprechende Bereiche jeweiliger Baumaterialschichten gerichtet sind.

Die Einrichtung 4 umfasst zur Erzeugung von Laserstrahlen 5 mehrere Laserdiodenelemente 10, welche jeweils zur Erzeugung eines direkt auf die Bauebene 9 gerichteten Laserstrahls 5 eingerichtet sind. Über die Einrichtung 4 erzeugte Laserstrahlen 5 treffen typischerweise unter einem Winkel von 90° bezüglich der Bauebenenebene auf die Bauebene 9 auf Die Einrichtung 4 kann insofern als "Diodenlaser" bezeichnet bzw. erachtet werden, da sie Laserdiodenelemente 10 zur Erzeugung von Laserstrahlen 5 bzw. Laserstrahlung umfasst. Die der Einrichtung 4 zugehörigen Laserdiodenelemente 10 können beispielsweise emittierte Laserleistungen im Bereich zwischen 0,1 und 10 Watt erzeugen.

Die Einrichtung 4 ist direkt in der Baukammer 8 angeordnet. Die Laserdiodenelemente 10 sind direkt über der Bauebene 9 angeordnet; zwischen den Laserdiodenelementen 10 und der Bauebene 9 befindet sich kein weiteres Bauteil, insbesondere kein optisches Maskenbauteil. Entsprechend sind die über die Laserdiodenelemente 10 erzeugbaren bzw. erzeugten Laserstrahlen 5 direkt auf die Bauebene 9 gerichtet und treffen direkt auf die Bauebene 9. Es ist nicht notwendig, die über die Laserdiodenelemente 10 erzeugbaren bzw. erzeugten Laserstrahlen 5 über eine Strahlablenkeinrichtung abzulenken.

In dem in Fig. 1 gezeigten Ausführungsbeispiel sind die Laserdiodenelemente 10 in einer matrixartigen Anordnung ("Matrix") angeordnet. Hierunter ist eine Anordnung der Laserdiodenelemente 10 in mehreren parallelen Reihen und Spalten zu verstehen. Die Matrix umfasst sonach mehrere parallel angeordnete Reihen aus mehreren Laserdiodenelementen 10 und mehrere parallel angeordnete Spalten aus mehreren Laserdiodenelementen 10. Die Reihen und Spalten liegen in einer parallel zu der Bauebene 9 liegenden Ebene. Die Spalten erstrecken sich winklig, insbesondere lotrecht, zu den Reihen und umgekehrt. Die matrixartige Anordnung von Laserdiodenelementen 10 entspricht einem Pixel-Raster, wie es beispielsweise bei Flüssigkristallanzeigeeinrichtungen ("LCD-Displays") vorgesehen ist; die einzelnen Laserdiodenelemente 10 entsprechen dabei den Pixeln entsprechender Flüssigkristallanzeigeeinrichtungen.

Die matrixartige Anordnung der Laserdiodenelemente 10 erstreckt sich flächenmäßig vollständig über die Bauebene 9. Die Laserdiodenelemente 10 liegen sonach der Gesamt(ober)fläche der Bauebene 9 direkt gegenüber und decken die Bauebene 9 flächenmäßig vollständig ab. Da die Laserdiodenelemente 10 die Bauebene 9 vollständig flächenmäßig abdecken, kann prinzipiell jeder Teil der Gesamt(ober)fläche der Bauebene 9 bedarfsweise ohne eine Bewegung der Einrichtung 4 relativ zu der Bauebene 9 selektiv belichtet werden. Die selektive Belichtung der Bauebene 9 erfolgt durch eine gezielte Ansteuerung einzelner, mehrerer oder sämtlicher Laserdiodenelemente 10 zur jeweiligen Erzeugung eines Laserstrahls 5 bestimmter Strahleigenschaften. Hierfür ist eine mit der Einrichtung 4 gekoppelte Steuereinrichtung 11 vorgesehen, welche innerhalb oder - wie strichliert dargestellt - außerhalb der Baukammer 8 angeordnet sein kann.

Die Laserdiodenelemente 10 sind - entsprechend dem Prinzip einer Flüssigkristallanzeigeeinrichtung - grundsätzlich einzeln, gruppenweise oder insgesamt zur jeweiligen Erzeugung eines Laserstrahls 5 mit bestimmten Strahleigenschaften ansteuerbar, d. h. insbesondere aktivierbar und/oder deaktivierbar. Unter einer Aktivierung bzw. Deaktivierung eines Laserdiodenelements 10 kann eine Bestromung des Laserdiodenelements 10 zu verstehen sein; das Laserdiodenelement 10 ist in einem aktivierten Zustand bestromt und erzeugt einen Laserstrahl 5 und in einem deaktivierten Zustand nicht bestromt und erzeugt keinen Laserstrahl 5. Unter einer Aktivierung bzw. Deaktivierung eines Laserdiodenelements 10 kann auch zu verstehen sein, dass der über das Laserdiodenelement 10 erzeugbare bzw. erzeugte Laserstrahl 5, z. B. durch Bewegen, insbesondere Verschwenken, des Laserdiodenelements 10, in einem aktivierten Zustand des Laserdiodenelements 10 auf die Bauebene 9 gerichtet und in einem deaktivierten Zustand des Laserdiodenelements 10 von der Bauebene 9 weg gerichtet ist.

Wie sich im Weiteren ergibt, sind die Laserdiodenelemente 10 in einer Halteeinrichtung 12 an vorbestimmbaren oder vorbestimmten Anordnungspositionen bedarfsweise anodenbar bzw. angeordnet. Die Halteeinrichtung 12 ist innerhalb der Baukammer 8 angeordnet. In dem in Fig. 1 gezeigten Ausführungsbeispiel ist die Halteeinrichtung 12 an einer Wandung der Baukammer 8 befestigt und nicht relativ zu der Bauebene 9 bewegbar. Die in der Halteeinrichtung 12 angeordneten Laserdiodenelemente 10 sind in einer definierten Position, d. h. insbesondere in einem definierten Abstand, relativ zu der Bauebene 9 angeordnet.

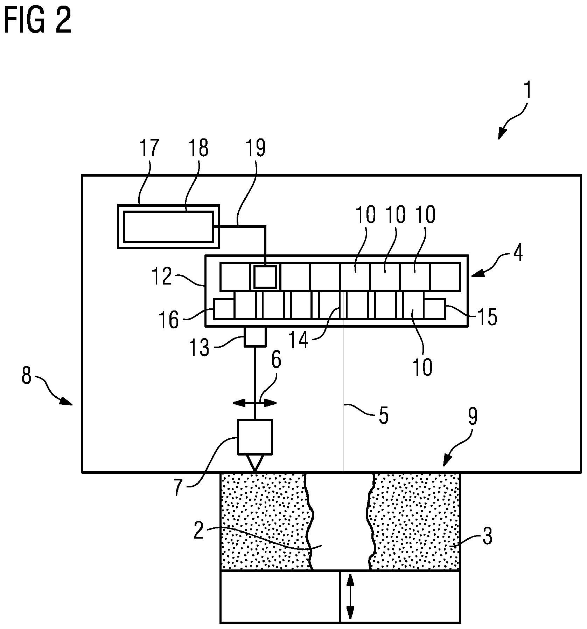

Fig. 2 zeigt eine Prinzipdarstellung einer Vorrichtung 1 gemäß einem erfindungsgemäßen Ausführungsbeispiel.

Ein erster Unterschied zu dem in Fig. 1 gezeigten Ausführungsbeispiel liegt darin, dass die Laserdiodenelemente 10 hier in mehreren parallel zu der Bauebene 9 liegenden Ebenen übereinander angeordnet sind. Die Anordnung von Laserdiodenelementen 10 in mehreren Ebenen übereinander ergibt eine besonders kompakte Anordnung der Laserdiodenelemente 10. Die Anordnung der Laserdiodenelemente 10 in mehreren Ebenen übereinander ist so gewählt, dass die über die jeweiligen Laserdiodenelemente 10 erzeugbaren Laserstrahlen 5 jeweils direkt auf die Bauebene 9 gerichtet werden können. Die in jeweiligen übereinander liegenden Ebenen angeordneten Laserdiodenelemente 10 sind in einem bestimmten räumlichen Versatz relativ zueinander angeordnet. Ein von einem in der oberen Ebene angeordneten Laserdiodenelement 10 erzeugter Laserstrahl 5 trifft also nicht auf ein in der unteren Ebene angeordnetes Laserdiodenelement 10, sondern tritt durch einen Freiraum 14, z. B. in Form eines Spalts, einer Bohrung oder einer sonstigen Öffnung, zwischen in der unteren Ebene unmittelbar benachbart angeordneten Laserdiodenelementen 10 auf die Bauebene 9.

Ein weiterer Unterschied zu dem in Fig. 1 gezeigten Ausführungsbeispiel liegt darin, dass die Beschichtereinrichtung 7 an der Halteeinrichtung 12 angeordnet ist. Die Beschichtereinrichtung 7 ist dabei in einem Bewegungsfreiheitsgrad (vgl. Doppelpfeil 6) relativ zu der Halteinrichtung 12 an der Halteeinrichtung 12 angeordnet. Zur Bewegung der Beschichtereinrichtung 7 relativ zu der Halteeinrichtung 12 ist eine mit der Beschichtereinrichtung 7 gekoppelte, insbesondere (elektro)motorische, Antriebs- bzw. Führungseinrichtung 13 vorgesehen. Es ist möglich, Beschichtungsvorgänge und Belichtungsvorgänge simultan durchzuführen; selbstverständlich werden hierbei nur Teile der Bauebene 9 belichtet, in welchen durch die Beschichtereinrichtung 7 bereits eine Baumaterialschicht ausgebildet wurde.

Ein weiterer Unterschied zu dem in Fig. 1 gezeigten Ausführungsbeispiel liegt darin, dass die Vorrichtung 1 eine Auswerteeinrichtung 16 zur, insbesondere optischen, Auswertung der Oberflächenqualität einer zu verfestigenden und/oder einer verfestigten Baumaterialschicht umfasst. Die Auswerteeinrichtung 16 kann als eine Kamera ausgebildet sein oder eine solche umfassen. Die Auswerteeinrichtung 16 ist ebenfalls an der Halteeinrichtung 12 angeordnet. Die Auswerteeinrichtung 16 kann ebenso in wenigstens einem Bewegungsfreiheitsgrad relativ zu der Halteeinrichtung 12 an der Halteeinrichtung 12 angeordnet sein. Zur Bewegung der Auswerteeinrichtung 16 relativ zu der Halteeinrichtung 12 kann eine mit der Auswerteeinrichtung 16 gekoppelte, insbesondere (elektro)motorische, Antriebs- und/oder Führungseinrichtung (nicht gezeigt) vorgesehen sein. Es ist möglich, Beschichtungsvorgänge, Belichtungsvorgänge und Auswertevorgänge simultan durchzuführen; selbstverständlich werden hierbei nur Teile der Bauebene 9 ausgewertet, in welchen durch die Beschichtereinrichtung 7 bereits eine Baumaterialschicht ausgebildet und belichtet wurde.

Ein weiterer Unterschied zu dem in Fig. 1 gezeigten Ausführungsbeispiel liegt daran, dass die Vorrichtung 1 eine Erfassungseinrichtung 15 zur Erfassung der Temperatur einer zu verfestigenden oder einer bereits verfestigten Baumaterialschicht umfasst. Die Erfassungseinrichtung 15 kann als Pyrometer ausgebildet sein oder wenigstens ein solches umfassen. Die über die Erfassungseinrichtung 15 erfassten Temperaturwerte können einer Vortemperierung einer zu verfestigenden Baumaterialschicht bzw. einer Nachtemperierung einer bereits verfestigten Baumaterialschicht zugrunde gelegt werden. Die Erfassungseinrichtung 15 ist ebenfalls an der Halteeinrichtung 12 angeordnet. Die Erfassungseinrichtung 15 kann ebenso in wenigstens einem Bewegungsfreiheitsgrad bewegbar relativ zu der Halteeinrichtung 12 an der Halteeinrichtung 12 angeordnet sein. Zur Bewegung der Erfassungseinrichtung 15 relativ zu der Halteeinrichtung 12 kann eine mit der Erfassungseinrichtung 15 gekoppelte, insbesondere (elektro)motorische, Antriebs- und/oder Führungseinrichtung (nicht gezeigt) vorgesehen sein. Es ist möglich, Temperaturerfassungsvorgänge und Belichtungsvorgänge simultan durchzuführen. Die Belichtungsparameter können über die Steuereinrichtung 11 in Abhängigkeit der erfassten Temperatur eingestellt werden.

Die Laserdiodenelemente 10 sind lösbar mit der Halteeinrichtung 12 verbunden. Die lösbare Verbindung der Laserdiodenelemente 10 mit der Halteeinrichtung 10 ist in dem Fall eines Defekts eines Laserdiodenelements 10 zweckmäßig, da das defekte Laserdiodenelement 10 ohne Weiteres aus der Halteeinrichtung 12 entnommen und ersetzt werden kann. Die Vorrichtung 1 kann eine Erfassungseinrichtung 17 zur Erfassung eines defekten Laserdiodenelements 10 umfassen, welche bei einer Erfassung eines defekten Laserdiodenelements 10, z. B. akustisch und/oder optisch, eine ein defektes Laserdiodenelement 10 betreffende Information ausgibt. Die Information kann Angaben über technische Spezifikationen, z. B. Typ, des defekten Laserdiodenelements 10, die genaue Art des Defekts, die Anordnung bzw. Position des defekten Laserdiodenelements 10 an oder in der Halteeinrichtung 12, etc. beinhalten.

Weiterhin kann die Vorrichtung 1 eine mit der Erfassungseinrichtung 17 zusammenwirkende Austauscheinrichtung 18 zum teil- oder vollautomatisierten Austausch defekter Laserdiodenelemente 10 umfassen. Die Austauscheinrichtung 18 umfasst eine Anzahl an Greiferelementen 19 zum Greifen von Laserdiodenelementen 10 im Rahmen des Austauschs. Die Austauscheinrichtung 18 kann z. B. als ein- oder mehrachsige Robotereinrichtung ausgebildet sein oder wenigstens eine solche umfassen.

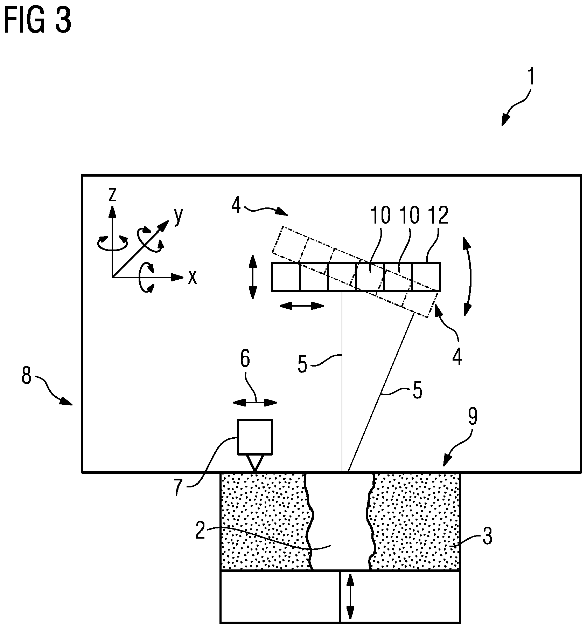

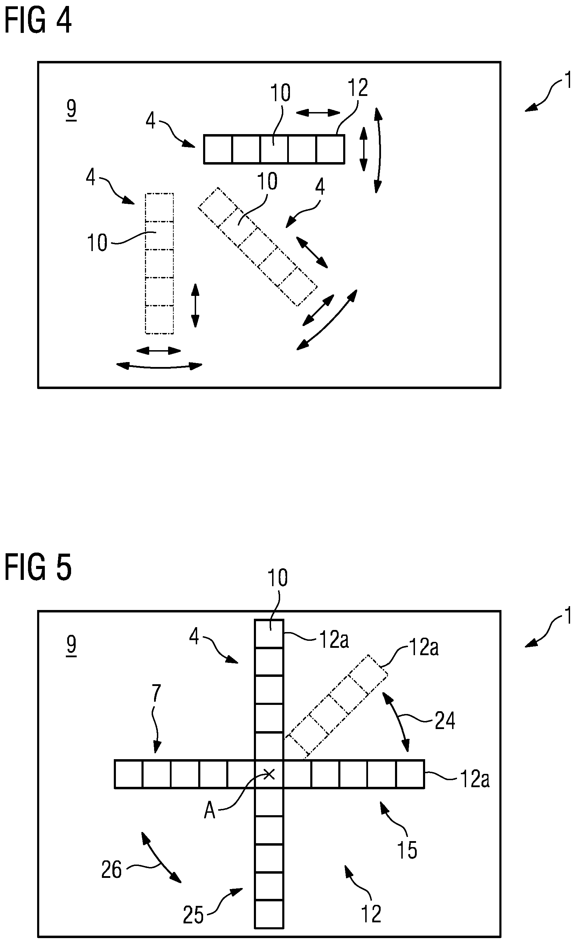

Die Fig. 3, 4 zeigen jeweils eine Prinzipdarstellung einer Vorrichtung 1 gemäß einem weiteren Ausführungsbeispiel, das nicht in den Schutzbereich der Ansprüche fällt. Fig. 3 zeigt die gesamte Vorrichtung 1, Fig. 4 zeigt als Ausschnitt der Vorrichtung 1 eine Aufsicht auf die Bauebene 9.

In dem in den Fig. 3, 4 gezeigten Ausführungsbeispiel sind die Laserdiodenelemente 10 reihen- oder spaltenartig in einer Ebene angeordnet und decken nur einen Teil der Bauebene 9 flächenmäßig ab. Die Laserdiodenelemente 10 liegen sonach einem Teil, d. h. einer Teil(ober)fläche der Gesamt(ober)fläche, der Bauebene 9 direkt gegenüber. Der über entsprechende Laserdiodenelemente 10 flächenmäßig abgedeckte Teil der Bauebene 9 lässt sich ohne eine zwingend notwendige mechanische Bewegung der Laserdiodenelemente 10 relativ zu der Bauebene 9 selektiv belichten.

Im Unterschied zu dem in den Fig. 1, 2 gezeigten Ausführungsbeispielen ist die Halteeinrichtung 12 in wenigstens einem Bewegungsfreiheitsgrad relativ zu der Bauebene 9 bewegbar gelagert. Die Bewegung der Halteeinrichtung 12 erfolgt über eine mit dieser gekoppelte (elektro)motorische Antriebs- bzw. Führungseinrichtung (nicht gezeigt). Die Bewegung der Halteeinrichtung 12 kann translatorische Bewegungsfreiheitsgrade entlang wenigstens einer Translationsachse und/oder rotatorische Bewegungsfreiheitsgrade um wenigstens eine Rotationsachse beinhalten (vgl. die in den Fig. 3, 4 dargestellten Pfeile). Bei der Bewegung der Halteeinrichtung 12 kann es sich sonach z. B. um eine Linear-, Dreh-, Kipp- oder Schwenkbewegung handeln. Eine verkippte bzw. verschwenkte Stellung der Halteeinrichtung 12 ist in Fig. 3 strichpunktiert dargestellt. Kombinierte Bewegungen in mehreren unterschiedlichen Bewegungsfreiheitsgraden sind möglich. Jeweilige Bewegungsfreiheitsgrade, in welchen die Halteeinrichtung 12 bewegbar gelagert sein kann, sind durch das dargestellte Achskreuz angedeutet; die Halteeinrichtung 12 kann insbesondere in den durch die x-, y- und z-Achse definierten Translations- und/oder Rotationsachsen bewegbar gelagert sein.

Die Bewegung der Halteeinrichtung 12 kann simultan mit der Belichtung der Bauebene 9 durch die Laserdiodenelemente 10 erfolgen. Die Halteeinrichtung 12 kann im Zusammenhang mit der Belichtung der Bauebene 9 auch in unterschiedlichen Bewegungsfreiheitsgraden bzw. in unterschiedlichen Bewegungsbahnen relativ zu der Bauebene 9 bewegt werden (vgl. Fig. 4). Derart können unterschiedliche Verfestigungsstrukturen, d. h. z. B. Schweißnähte, in der zu verfestigenden Baumaterialschicht ausgebildet und prozessbedingt entstehende Eigenspannungen in dem herzustellenden Objekt 2 reduziert werden, was sich positiv auf die Qualität des herzustellenden Objekts 2 auswirkt.

Bei dem in den Fig. 3, 4 gezeigte Ausführungsbeispiel mit einer Halteeinrichtung 12 mit daran oder darin in einer reihen- oder spaltenartigen Anordnung angeordneten Laserdiodenelementen 10 kann die Halteeinrichtung 12 zunächst z. B. entlang einer durch eine erste, z. B. lineare, Bewegungsachse definierten ersten Bewegungsbahn über die Bauebene 9 und nachfolgend entlang einer durch eine weitere, z. B. lineare, Bewegungsachse definierten weiteren Bewegungsbahn über die Bauebene 9 bewegt werden (vgl. die in Fig. 4 strichpunktiert dargestellte Halteeinrichtung 12). Die weitere Bewegungsbahn kann z. B. winklig, insbesondere orthogonal, zu der ersten Bewegungsbahn verlaufen (vgl. Fig. 4).

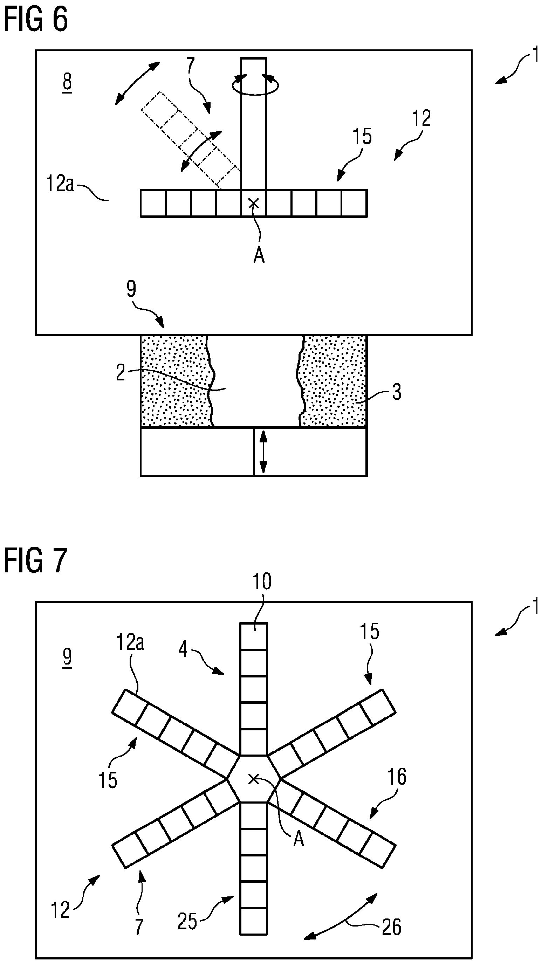

Die Fig. 5, 6 zeigen eine Prinzipdarstellung einer Vorrichtung 1 gemäß einem weiteren Ausführungsbeispiel, das nicht in den Schutzbereich der Ansprüche fällt. Fig. 5 zeigt als Ausschnitt der Vorrichtung 1 eine Aufsicht auf die Bauebene 9, Fig. 6 zeigt als Ausschnitt der Vorrichtung 1 eine Seitenansicht auf die Halteeinrichtung 12.

Die Halteeinrichtung 12 umfasst hier mehrere Halteeinrichtungssegmente 12a, wobei wenigstens zwei Halteeinrichtungssegmente 12a in wenigstens einem Bewegungsfreiheitsgrad relativ zu der Bauebene 9 und in wenigstens einem Bewegungsfreiheitsgrad relativ zueinander bewegbar angeordnet sind. Die Bewegung der Halteeinrichtungssegmente 12a kann translatorische Bewegungsfreiheitsgrade entlang wenigstens einer Translationsachse und/oder rotatorische Bewegungsfreiheitsgrade um wenigstens eine Rotationsachse beinhalten. In Fig. 5 ist strichpunktiert ein in Richtung entgegen des Uhrzeigersinns relativ zu einem weiteren Halteeinrichtungssegment 12a verschwenkbares Halteeinrichtungssegment 12a dargestellt. Die durch den Pfeil 24 angedeutete Schwenkbewegung erfolgt in einer parallel zu der Bauebene 9 liegenden Ebene. An dem verschwenkbaren Halteeinrichtungssegment 12a kann z. B. eine Beschichtereinrichtung 7 angeordnet sein. In Figur 6 ist strichpunktiert eine Schwenkbewegung eines Halteeinrichtungssegments 12a relativ zu der Bauebene 9 dargestellt. An dem verschwenkbaren Halteeinrichtungssegment 12a kann wiederum z. B. eine Beschichtereinrichtung 7 angeordnet sein.

Die Halteeinrichtungssegmente 12a können unterschiedlich funktionalisiert sein. An wenigstens einem ersten Halteeinrichtungssegment 12a ist typischerweise eine Anzahl an Laserdiodenelementen 10, z. B. in einer reihen- und/oder spaltenartigen Anordnung, zur Belichtung einer zu verfestigenden Baumaterialschicht angeordnet. An weiteren Halteeinrichtungssegmenten 12a können eine weitere Anzahl an Laserdiodenelementen 10 zur Vortemperierung einer zu verfestigenden Baumaterialschicht und/oder zur Nachtemperierung einer bereits verfestigten Baumaterialschicht angeordnet sein. Alternativ oder ergänzend können an weiteren Halteeinrichtungssegmenten 12a weitere Funktionskomponenten der Vorrichtung 1 angeordnet sein. Bei solchen weiteren Funktionskomponenten kann es sich z. B. um eine Aufbring- bzw. Dosiereinrichtung 25 zur Aufbringung einer bestimmten Menge an Baumaterial 3 auf eine Bauebene 9, eine Beschichtereinrichtung 7 zur Ausbildung einer zu verfestigenden Baumaterialschicht, eine Auswerteeinrichtung 16 zur, insbesondere optischen, Auswertung der Oberflächenqualität einer zu verfestigenden und/oder einer verfestigten Baumaterialschicht, eine Erfassungseinrichtung 15 zur Erfassung der Temperatur einer zu verfestigenden Baumaterialschicht oder einer bereits verfestigten Baumaterialschicht, etc. handeln.

Die in den Fig. 5, 6 gezeigte Halteeinrichtung 12 umfasst vier kreuzartig angeordnete Halteeinrichtungssegmente 12a, welche einzeln, gruppenweise oder insgesamt relativ zu der Bauebene 9 und/oder einzeln oder gruppenweise relativ zueinander bewegbar sind. An einem ersten Halteeinrichtungssegment 12a ist eine Aufbring- bzw. Dosiereinrichtung 25 angeordnet, an einem zweiten Halteeinrichtungssegment 12a eine Beschichtereinrichtung 7, an einem dritten Halteeinrichtungssegment 12a eine Anzahl an Laserdiodenelementen 10 zur Belichtung einer zu verfestigenden Baumaterialschicht und an einem vierten Halteeinrichtungssegment 12a eine Erfassungseinrichtung 15 zur Erfassung der Temperatur einer verfestigten Baumaterialschicht angeordnet.

Fig. 7 zeigt eine Prinzipdarstellung einer Vorrichtung 1 gemäß einem weiteren Ausführungsbeispiel, das nicht in den Schutzbereich der Ansprüche fällt. Fig. 7 zeigt als Ausschnitt der Vorrichtung 1 eine Aufsicht auf die Bauebene 9.

Die in Fig. 7 gezeigte Halteeinrichtung 12 umfasst sechs kreuzartig angeordnete Halteeinrichtungssegmente 12a, welche einzeln, gruppenweise oder insgesamt relativ zu der Bauebene 9 und/oder einzeln oder gruppenweise relativ zueinander bewegbar sind. An einem ersten Halteeinrichtungssegment 12a ist eine Aufbring- bzw. Dosiereinrichtung 25, an einem zweiten Halteeinrichtungssegment 12a eine Beschichtereinrichtung 7, an einem dritten Halteeinrichtungssegment 12a eine Erfassungseinrichtung 15 zur Erfassung der Temperatur einer zu verfestigenden Baumaterialschicht, an einem vierten Halteeinrichtungssegment 12a eine Anzahl an Laserdiodenelementen 10 zur Belichtung einer zu verfestigenden Baumaterialschicht, an einem fünften Halteeinrichtungssegment 12a eine Erfassungseinrichtung 15 zur Erfassung der Temperatur einer verfestigten Baumaterialschicht und an einem sechsten Halteeinrichtungssegment 12a eine Auswerteeinrichtung 16 zur, insbesondere optischen, Auswertung der Oberflächenqualität einer verfestigten Baumaterialschicht angeordnet.

Grundsätzlich gilt, dass die Bewegung von Halteeinrichtungssegmenten 12a in wenigstens einem Bewegungsfreiheitsgrad relativ zu der Bauebene 9 und/oder in wenigstens einem Bewegungsfreiheitsgrad relativ zueinander alternativ oder ergänzend zu einer Bewegung der gesamten Halteeinrichtung 12 relativ zu der Bauebene 9 erfolgen kann. Die gegebenenfalls zusätzliche Bewegung der gesamten Halteeinrichtung 12 relativ zu der Bauebene 9 ist in den Fig. 5, 7 durch den Pfeil 26 angedeutet.

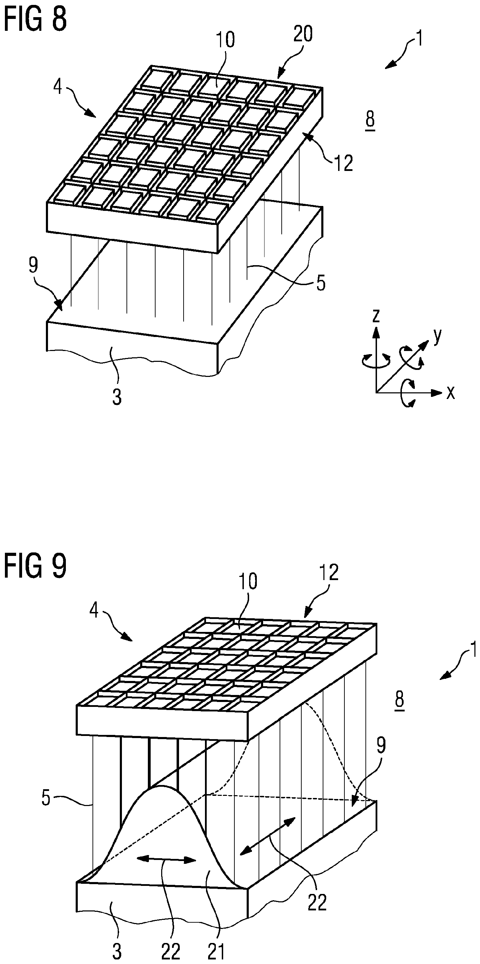

Fig. 8 zeigt eine Prinzipdarstellung einer Vorrichtung 1 gemäß einem weiteren Ausführungsbeispiel, das nicht in den Schutzbereich der Ansprüche fällt. Fig. 8 zeigt als Ausschnitt der Vorrichtung 1 eine perspektivische Ansicht der Einrichtung 4 und der Bauebene 9.

Anhand von Fig. 8 sind die vorbestimmbaren bzw. vorbestimmten Anordnungspositionen von Laserdiodenelementen 10 an bzw. in der Halteeinrichtung 12 ersichtlich. Die Anordnungspositionen von Laserdiodenelementen 10 sind in Fig. 8 beispielhaft rasterartig verteilt, sodass eine matrixartige Anordnung von Laserdiodenelementen 10 möglich ist.

Die Anordnungspositionen sind typischerweise durch halteeinrichtungsseitige Aufnahmemittel 20 zur Aufnahme wenigstens eines Laserdiodenelements 10 definiert. Die Anzahl an Aufnahmemitteln 20 entspricht wenigstens der Anzahl an Laserdiodenelementen 10. Die Aufnahmemittel können 20 Verbindungselemente (nicht gezeigt) umfassen, welche mit an den Laserdiodenelementen 10 angeordneten oder ausgebildeten korrespondierenden Gegenverbindungselementen (nicht gezeigt) unter Ausbildung einer (positions)stabilen Verbindung der Laserdiodenelemente 10 mit der Halteeinrichtung 12 zusammenwirken. Über das Zusammenwirken entsprechender Verbindungselemente und entsprechender Gegenverbindungselemente kann z. B. eine form- und/oder kraftschlüssige Verbindung hergestellt werden; die Verbindungselemente können z. B. als Form- und/oder Kraftschlusselemente, d. h. z. B. Steckelemente, wie Steckzapfen oder hierzu korrespondierende Steckaufnahmen, und/oder Rast-/Schnappelemente, wie Rast- /Schnappvorsprünge oder hierzu korrespondierende Ausnehmungen und/oder Schraub- /Gewindeelemente, wie Schraub- oder Gewindebolzen oder hierzu korrespondierende Schraub- oder Gewindeaufnahmen, etc., ausgebildet sein. Die Gegenverbindungselemente können als hierzu korrespondierende Form- und/oder Kraftschlusselemente ausgebildet sein. Selbstverständlich können Laserdiodenelemente 10 auch stoffschlüssig, d. h. z. B. geklebt, mit der Halteeinrichtung 12 verbunden sein.

Anhand von Fig. 8 ist ferner ersichtlich, dass auch Laserdiodenelemente 10 in wenigstens einem Bewegungsfreiheitsgrad relativ zu der Halteeinrichtung 12 und somit auch relativ zu der Bauebene 9 bewegbar an oder in der Halteeinrichtung 12 anordenbar oder angeordnet sein können. Über die Bewegung einzelner, mehrerer oder sämtlicher Laserdiodenelemente 10 relativ zu der Halteeinrichtung 12 ist es z. B. möglich, Laserdiodenelemente 10 im Hinblick auf eine konkrete Belichtungssituation relativ zu der Bauebene 9 zu bewegen. Ebenso ist es möglich, Laserdiodenelemente 10 in einen deaktivierten Zustand, in welchem ein jeweiliger erzeugbarer bzw. erzeugter Laserstrahl 5 von der Bauebene 9 weg gerichtet ist, zu bewegen, d. h. insbesondere zu verkippen bzw. zu verschwenken. Die Bewegung der Laserdiodenelemente 10 erfolgt über eine mit diesen gekoppelte (elektro)motorische Antriebs- bzw. Führungseinrichtung (nicht gezeigt). Die Bewegung eines Laserdiodenelements 10 kann translatorische Bewegungsfreiheitsgrade entlang wenigstens einer Translationsachse und/oder rotatorische Bewegungsfreiheitsgrade um wenigstens eine Rotationsachse beinhalten. Bei der Bewegung eines Laserdiodenelements 10 kann es sich sonach z. B. um eine Linear-, Dreh-, Kipp- oder Schwenkbewegung handeln. Kombinierte Bewegungen in mehreren unterschiedlichen Bewegungsfreiheitsgraden sind möglich. Jeweilige Bewegungsfreiheitsgrade, in welchen die Laserdiodenelemente 10 bewegbar gelagert sein können, sind auch in Fig. 8 durch das dargestellte Achskreuz angedeutet; die Laserdiodenelemente 10 können insbesondere in den durch die x-, y- und z-Achse definierten Translations- und Rotationsachsen bewegbar gelagert sein.

Auch die Bewegung der Laserdiodenelemente 10 kann simultan mit der Belichtung der Bauebene 9 durch die Laserdiodenelemente 10 erfolgen. Einzelne, mehrere oder sämtliche Laserdiodenelemente 10 können im Zusammenhang mit der Belichtung der Bauebene 9 auch in unterschiedlichen Bewegungsfreiheitsgraden bzw. in unterschiedlichen Bewegungsbahnen relativ zu der Bauebene 9 bewegt werden. Auch derart können unterschiedliche Verfestigungsstrukturen, wie erwähnt z. B. Schweißnähte, in der zu verfestigenden Baumaterialschicht ausgebildet und prozessbedingt entstehende Eigenspannungen in dem herzustellenden Objekt 2 reduziert werden, was sich positiv auf die Qualität des herzustellenden Objekts 2 auswirkt. Einzelne, mehrere oder sämtliche Laserdiodenelemente 10 können zunächst z. B. entlang einer durch eine erste, z. B. lineare, Bewegungsachse definierten ersten Bewegungsbahn über die Bauebene 9 und nachfolgend entlang einer durch weitere, z. B. lineare, Bewegungsachse definierten weiteren Bewegungsbahn über die Bauebene 9 bewegt werden. Die weitere Bewegungsbahn kann auch hier z. B. winklig, insbesondere orthogonal, zu der ersten Bewegungsbahn verlaufen.

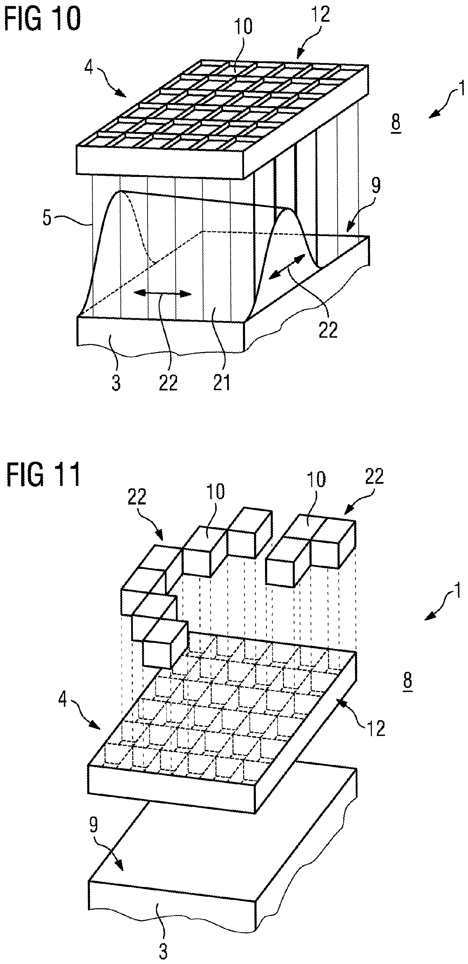

Die Fig. 9, 10 zeigen je eine Prinzipdarstellung einer Vorrichtung 1 gemäß einem weiteren Ausführungsbeispiel, das nicht in den Schutzbereich der Ansprüche fällt. Die Fig. 9, 10 zeigen jeweils als Ausschnitt der Vorrichtung 1 eine perspektivische Ansicht der Einrichtung 4 und der Bauebene 9.

Im Zusammenhang mit dem in den Fig. 9, 10 gezeigten Ausführungsbeispiel soll erläutert werden, dass einzelne, mehrere oder sämtliche Laserdiodenelemente 10 in wenigstens einem die Strahleigenschaften des über dieses erzeugbaren Laserstrahls 5 betreffenden Parameter, insbesondere in ihrer Eingangs- und/oder Ausgangsleistung, variierbar sein können. Einzelne, mehrere oder sämtliche Laserdiodenelemente 10 können anlog einer dimmbaren LED "dimmbar" sein. Entsprechend lassen sich über die in wenigstens einem die Strahleigenschaften betreffenden Parameter variierbaren Laserdiodenelemente 10, z. B. durch Variation der Eingangs- und/oder Ausgangsleistung, Laserstrahlen 5 mit unterschiedlichen Strahleigenschaften, d. h. z. B. unterschiedlicher Energiedichte, Intensität, etc., erzeugen. Entsprechend lassen sich bei simultaner Erzeugung mehrerer Laserstrahlen 5 bestimmte Gesamtstrahlenergieprofile 21 ausbilden. Die Laserdiodenelemente 10 können derart angesteuert bzw. in ihrer Ausgangsleistung variiert werden, dass sich ein Gesamtstrahlenergieprofil 21 mit einer bestimmten zwei- oder dreidimensionalen geometrischen Form ergibt; für das in den Fig. 9, 10 beispielhaft gezeigte gaußförmige Gesamtstrahlenergieprofil 21 werden mittig bezüglich des Gesamtstrahlenergieprofils 21 angeordnete Laserdiodenelemente 10 im Vergleich zu randseitig bezüglich des Gesamtstrahlenergieprofils 21 angeordneten Laserdiodenelemente 10 mit einer höheren Leistung betrieben. Anhand der Fig. 9, 10 ist ersichtlich, dass sich Gesamtstrahlenergieprofile 21 in unterschiedlichen Ausrichtungen relativ zu der Bauebene 9 erzeugen lassen.

Wie durch die Pfeile 22 angedeutet, können die Laserdiodenelemente 10 ferner derart angesteuert bzw. in ihrer Ausgangsleistung variiert werden, dass sich ein entsprechend einer Wellenfront entlang der Bauebene 9, gegebenenfalls hin und her, bewegbares bzw. bewegendes, mithin ein dynamisches Gesamtstrahlenergieprofil 21 ergibt. Hierzu werden die Laserdiodenelemente 10 analog einer mehrere LEDs umfassenden LED-Anzeige zur bewegten Anzeige von alphanumerischen Symbolen angesteuert. Die Laserdiodenelemente 10 entsprechen den der LED-Anzeige zugehörigen LEDs.

Im Zusammenhang mit dem in Fig. 9, 10 gezeigten Ausführungsbeispiel, jedoch nicht auf dieses beschränkt, ist anzumerken, dass sich einzelne, mehrere oder sämtliche Laserdiodenelemente 10 im Allgemeinen in wenigstens einem die Strahleigenschaften des über diese jeweils erzeugbaren Laserstrahls 5 betreffenden Parameter unterscheiden können. Die Ausbildung bestimmter zwei- oder dreidimensionaler Gesamtstrahlenergieprofile mit zumindest abschnittsweise gleichen, ähnlichen oder unterschiedlichen Querschnittsprofilen lässt sich sonach auch durch Laserdiodenelemente 10 realisieren, welche sich in wenigstens einem die Strahleigenschaften des über diese jeweils erzeugbaren Laserstrahls 5 betreffenden Parameter, d. h. z. B. in ihrer Eingangs- und/oder Ausgangsleistung, unterscheiden.

Anhand des in den Fig. 9, 10 gezeigten Ausführungsbeispiels ist ersichtlich, dass unbewegte oder bewegte Gesamtstrahlenergieprofile 21 mit zumindest abschnittsweise gleichen, ähnlichen oder unterschiedlichen Querschnittsprofilen, im Allgemeinen Gesamtstrahlenergieprofile 21 beliebiger zwei- oder dreidimensionaler geometrischer Gestalt realisiert werden können.

Fig. 11 zeigt eine Prinzipdarstellung der Vorrichtung 1 gemäß einem weiteren Ausführungsbeispiel, das nicht in den Schutzbereich der Ansprüche fällt. Fig. 11 zeigt als Ausschnitt der Vorrichtung 1 eine perspektivische Ansicht der Einrichtung 4 und der Bauebene 9.

Anhand von Fig. 11 ist ersichtlich, dass es durch die bedarfsweise Anordnung von Laserdiodenelementen 10 an vorbestimmbaren bzw. vorbestimmten Anordnungspositionen der Halteeinrichtung 12 möglich ist, dass Laserdiodenelemente 10 in im Hinblick auf eine, gegebenenfalls querschnittsbezogene, Außen- und/oder Innenkontur eines herzustellenden Objekts 2 in einer bestimmten räumlichen Anordnung zueinander vorkonfigurierten Gruppen 22 bedarfsweise an vorbestimmbaren oder vorbestimmten Anordnungspositionen der Halteeinrichtung 12 anordenbar oder angeordnet sind. Es ist also im Zusammenhang mit der generativen Herstellung eines Objekts 2 mit einer bestimmten Außen- und/oder Innenkontur möglich, wenigstens eine aus in einer bestimmten räumlichen Anordnung zueinander angeordneten Laserdiodenelementen 10 gebildete vorkonfigurierte Gruppe 22 an Laserdiodenelementen 10 vorzubereiten, diese, wie durch den Pfeil 23 angedeutet, für die Durchführung der generativen Herstellung des Objekts 2 mit der Halteeinrichtung 12 zu verbinden, d. h. z. B. in die Halteeinrichtung 12 einzusetzen, und nach der Herstellung des Objekts 12 aus der Halteeinrichtung 12 zu entnehmen bzw. für eine nachfolgende Herstellung eines anderen Objekts 2 mit einer anderen Außen- und/oder Innenkontur gegen eine im Hinblick auf die Außen- und/oder Innenkontur des anderen Objekts 2 in einer bestimmten räumlichen Anordnung zueinander vorkonfigurierte andere Gruppe 22 an Laserdiodenelementen 10 auszutauschen.

Jeweilige vorkonfigurierte Gruppen 22 an Laserdiodenelementen 10 sind also grundsätzlich einem Objekt 2 mit einer bestimmten geometrischen Gestalt, d. h. insbesondere mit einer bestimmten Außen- und/oder Innenkontur, zuordenbar bzw. zugeordnet. Jeweilige vorkonfigurierte Gruppen 22 an Laserdiodenelementen 10 können unter Beibehaltung der Anordnung der Laserdiodenelemente 10 in einem Lager (zwischen)gelagert werden und beliebig oft für die generative Herstellung von diesen jeweils zugeordneten Objekten 2 verwendet werden. Selbstverständlich ist es auch möglich eine vorkonfigurierte Gruppe 22 an Laserdiodenelementen 10 im Hinblick auf die geometrische Gestalt eines anderen Objekts 2 durch eine Neuanordnung einzelner, mehrerer oder sämtlicher Laserdiodenelemente 10 analog einem Setzkasten umzukonfigurieren ("Setzkastenprinzip").

Da in einem generativen Bauvorgang mehrere Objekte 2 geometrisch unterschiedlicher Gestalt hergestellt werden können, können selbstverständlich auch mehrere unterschiedlich vorkonfigurierte Gruppen 22 an Laserdiodenelementen 10 vorhanden sein. In dem in Fig. 11 gezeigten Ausführungsbeispiel sind entsprechend beispielhaft unterschiedlich vorkonfigurierte Gruppen 22 an Laserdiodenelementen 10 dargestellt. Eine beispielhafte erste Gruppe 22 sichelförmig angeordneter Laserdiodenelemente 10 dient der Herstellung eines sichelförmigen Objekts 2, eine beispielhafte weitere Gruppe 22 L-förmig angeordneter Laserdiodenelemente 10 dient der Herstellung eines L-förmigen Objekts 2.

Für alle Ausführungsbeispiele gilt, dass sich über über unterschiedliche Laserdiodenelemente 10 erzeugbare Laserstrahlen 5 unterschiedliche Funktionen, d. h. insbesondere eine Vortemperierung zu verfestigender Baumaterialschichten und/oder eine Nachtemperierung bereits verfestigter Baumaterialschichten realisieren lassen. Beispielsweise kann wenigstens ein erstes Laserdiodenelement 10 bzw. eine Gruppe erster Laserdiodenelemente 10 zur Erzeugung eines Laserstrahls 5 zur Verfestigung von zu verfestigenden Baumaterialschichten eingerichtet sein und wenigstens ein weiteres Laserdiodenelement 10 bzw. eine Gruppe weiterer Laserdiodenelemente 10 zur Erzeugung eines Laserstrahls 5 zur Vortemperierung von zu verfestigenden Baumaterialschichten und/oder zur Erzeugung eines Laserstrahls 5 zur Nachtemperierung von bereits verfestigten Baumaterialschichten eingerichtet sein. Ein zur Verfestigung von Baumaterialschichten erzeugter Laserstrahl 5 weist typischerweise eine höhere Energie(dichte) als ein zur Vor- bzw. Nachtemperierung von zu verfestigenden bzw. bereits verfestigten Baumaterialschichten erzeugter Laserstrahl 5 auf.

Wenngleich in den Fig. nicht gezeigt, kann Vorrichtung 1 eine hard- und/oder softwaremäßig implementierte Simulationseinrichtung, welche zur Simulation wenigstens eines im Rahmen der Durchführung eines generativen Bauprozesses veränderlichen objektbezogenen Objektparameters des herzustellenden oder hergestellten Objekts 2 eingerichtet ist, umfassen. Die Simulationseinrichtung kann auf Grundlage bzw. unter Berücksichtigung diverser für den jeweils zu simulierenden Objektparameter relevanten Informationen, wie z. B. Informationen über das im Rahmen der Durchführung des generativen Bauprozesses verwendete Baumaterial 3, Informationen über diverse Eigenschaften, z. B. Dichte, Geometrie, etc., des herzustellenden bzw. hergestellten Objekts 2, etc., eine Simulation wenigstens eines sich im Rahmen der Durchführung eines generativen Bauprozesses mit der Vorrichtung 1 veränderlichen objektbezogenen Objektparameters vornehmen. Hierfür ist die Simulationseinrichtung mit geeigneten Simulationsalgorithmen ausgestattet. Die Simulation kann vor und/oder während der Durchführung eines mit der Vorrichtung durchgeführten generativen Bauprozesses erfolgen.

Bei einem entsprechenden sich im Rahmen der Durchführung eines generativen Bauprozesses veränderlichen objektbezogenen Objektparameter kann es sich z. B. um den im Rahmen der Durchführung eines generativen Bauprozesses entstehenden Wärmefluss durch das herzustellende oder hergestellte Objekt 2 und/oder um die Temperatur bzw. die Temperaturverteilung des herzustellenden oder hergestellten Objekts 2 handeln. Alternativ oder ergänzend ist es denkbar, dass es sich bei dem objektbezogenen Objektparameter um im Rahmen der Durchführung eines generativen Bauprozesses gegebenenfalls entstehende mechanische Belastungen, insbesondere Spannungen, in dem herzustellenden oder hergestellten dreidimensionalen Objekt 2 handelt.

Die Vorrichtung 1 umfasst, wie erwähnt, eine Steuereinrichtung 11, welche zur gezielten Ansteuerung der Einrichtung, d. h. insbesondere zur gezielten Ansteuerung einzelner, mehrerer oder sämtlicher Laserdiodenelemente zur jeweiligen Erzeugung eines Laserstrahls bestimmter Strahleigenschaften, eingerichtet ist. Die Steuereinrichtung 11 erzeugt entsprechende Steuerungsinformationen auf Grundlage welcher eine gezielte Ansteuerung einzelner, mehrerer oder sämtlicher Laserdiodenelemente 9 zur jeweiligen Erzeugung eines Laserstrahls bestimmter Strahleigenschaften erfolgt. Wie erwähnt, können einzelne, mehrere oder sämtliche Laserdiodenelemente in wenigstens einem die Strahleigenschaften des über diese jeweils erzeugbaren Laserstrahls betreffenden Parameter, insbesondere in ihrer Eingangs- und/oder Ausgangsleistung, variierbar sein. Insbesondere ist es möglich, dass einzelne, mehrere oder sämtliche Laserdiodenelemente anlog einer dimmbaren LED "dimmbar" sind. Entsprechend lassen sich über ein in wenigstens einem die Strahleigenschaften betreffenden Parameter variierbares Laserdiodenelement, z. B. durch Variation der Eingangs- und/oder Ausgangsleistung, Laserstrahlen mit unterschiedlichen Strahleigenschaften, d. h. z. B. unterschiedlicher Energiedichte, Intensität, etc., erzeugen.

Die Steuereinrichtung 11 kann zur gezielten Ansteuerung einzelner, mehrerer oder sämtlicher Laserdiodenelemente 10 zur jeweiligen Erzeugung eines Laserstrahls 5 bestimmter Strahleigenschaften auf Grundlage des bzw. wenigstens eines durch die Simulationseinrichtung simulierten objektbezogenen Objektparameters eingerichtet sein. Die Einrichtung 4 ist sonach bei entsprechender Ansteuerung durch die Steuereinrichtung 11 eingerichtet, durch entsprechende Ansteuerung einzelner, mehrerer oder sämtlicher Laserdiodenelemente 10 zur jeweiligen Erzeugung eines Laserstrahls 5 bestimmter Strahleigenschaften wenigstens einen entsprechenden objektbezogenen Objektparameter auf einen bestimmten Wert einzustellen bzw. auf einem bestimmten Wert zu halten. Beispielsweise kann die Einrichtung 4 bei entsprechender Ansteuerung durch die Steuereinrichtung 11 eingerichtet sein, durch entsprechende Ansteuerung einzelner, mehrerer oder sämtlicher Laserdiodenelemente 10 zur jeweiligen Erzeugung eines Laserstrahls 5 bestimmter Strahleigenschaften (im Rahmen der Durchführung des generativen Bauprozesses) einen bestimmten Wärmefluss durch das herzustellende oder hergestellte Objekt 2 zu erzeugen und/oder aufrechtzuerhalten.

Über die in den Fig. gezeigten Vorrichtungen 1 lässt sich jeweils ein Verfahren zur generativen Herstellung eines dreidimensionalen Objekts 2 durch sukzessive schichtweise selektive Verfestigung einzelner Baumaterialschichten aus verfestigbarem Baumaterial 2 vermittels wenigstens eines Laserstrahls 5 realisieren. Bei dem Verfahren kann es sich um ein selektives Laserschmelzverfahren (SLM-Verfahren) oder um ein selektives Lasersinterverfahren (SLS-Verfahren) handeln.

### BEZUGSZEICHENLISTE

- 1: Vorrichtung
- 2: Objekt
- 3: Baumaterial
- 4: Einrichtung
- 5: Laserstrahl
- 6: Doppelpfeil
- 7: Beschichtereinrichtung
- 8: Baukammer
- 9: Bauebene
- 10: Laserdiodenelement
- 11: Steuereinrichtung
- 12: Halteeinrichtung
- 13: Antriebs- und/oder Führungseinrichtung
- 14: Freiraum
- 15: Erfassungseinrichtung
- 16: Auswerteeinrichtung
- 17: Erfassungseinrichtung
- 18: Austauscheinrichtung
- 19: Greiferelement
- 20: Aufnahmemittel
- 21: Gesamtstrahlenergieprofil
- 22: Gruppe
- 23: Pfeil
- 24: Pfeil
- 25: Aufbring- bzw. Dosiereinrichtung
- 26: Pfeil
- 27: optisches Element
- 28: Lichtleitelement
- 29: Fokussieroptik

## Patentansprüche

1. Vorrichtung (1) zur generativen Herstellung eines dreidimensionalen Objekts (2) durch sukzessive schichtweise selektive Verfestigung von Baumaterialschichten aus verfestigbarem Baumaterial (3) vermittels wenigstens eines Laserstrahls (5), umfassend wenigstens eine Einrichtung (4) zur Erzeugung wenigstens eines Laserstrahls (5) zur schichtweisen selektiven Verfestigung einzelner Baumaterialschichten aus verfestigbarem Baumaterial (3), wobei die Einrichtung (4) mehrere direkt über der Bauebene (9), in welcher selektiv zu verfestigende oder verfestigte Baumaterialschichten ausgebildet sind, anordenbare oder angeordnete Laserdiodenelemente (10) umfasst, welche jeweils zur Erzeugung eines direkt auf die Bauebene gerichteten Laserstrahls (5) eingerichtet sind, **dadurch gekennzeichnet, dass**
die mehreren Laserdiodenelemente (10) in einem bestimmten räumlichen Versatz zueinander in mehreren Ebenen übereinander angeordnet sind, wobei
die Anordnung der Laserdiodenelemente (10) in den mehreren Ebenen übereinander so gewählt ist, dass die Laserstrahlen (5) jeweils direkt auf die Bauebene (9) gerichtet werden können, wobei
ein von einem in einer oberen Ebene angeordneten Laserdiodenelement (10) erzeugte Laserstrahl (5) durch einen Freiraum zwischen in einer unteren Ebene unmittelbar benachbart angeordneten Laserdiodenelementen (10) auf die Bauebene (9) trifft.

2. Vorrichtung nach Anspruch 1, **dadurch gekennzeichnet, dass** die Laserdiodenelemente (10) wenigstens einen Teil der Bauebene (9), gegebenenfalls die vollständige Bauebene (9), flächenmäßig abdecken.

3. Vorrichtung nach Anspruch 1 oder 2, **dadurch gekennzeichnet, dass** mehrere Laserdiodenelemente (10) in wenigstens einer Ebene reihen- und/oder spaltenartig angeordnet sind.

4. Vorrichtung nach einem der vorhergehenden Ansprüche, **dadurch gekennzeichnet, dass** mehrere, gegebenenfalls sämtliche, Laserdiodenelemente (10) im Hinblick auf eine Außen- und/oder Innenkontur eines herzustellenden dreidimensionalen Objekts (2) anordenbar oder angeordnet sind.

5. Vorrichtung nach einem der vorhergehenden Ansprüche, **dadurch gekennzeichnet, dass** wenigstens ein Laserdiodenelement (10) in wenigstens einem die Strahleigenschaften des über dieses erzeugbaren Laserstrahls (5) betreffenden Parameter, insbesondere in seiner Ausgangsleistung, variierbar ist.

6. Vorrichtung nach einem der vorhergehenden Ansprüche, **dadurch gekennzeichnet, dass** die Laserdiodenelemente (10) einzeln, in Gruppen oder gemeinsam zur jeweiligen Erzeugung eines Laserstrahls (5) mit bestimmten Strahleigenschaften ansteuerbar, insbesondere aktivierbar und/oder deaktivierbar, sind.

7. Vorrichtung nach einem der vorhergehenden Ansprüche, **dadurch gekennzeichnet, dass** sich einzelne, mehrere oder sämtliche Laserdiodenelemente (10) in wenigstens einer Strahleigenschaft des über diese jeweils erzeugbaren Laserstrahls (5) unterscheiden.

8. Vorrichtung nach Anspruch 7, **dadurch gekennzeichnet, dass** wenigstens ein erstes Laserdiodenelement (10) zur Erzeugung eines Laserstrahls (5) zur Verfestigung von zu verfestigenden Baumaterialschichten eingerichtet ist und wenigstens ein weiteres Laserdiodenelement (10) zur Erzeugung eines Laserstrahls (5) zur Vortemperierung von zu verfestigenden Baumaterialschichten und/oder zur Erzeugung eines Laserstrahls zur Nachtemperierung von bereits verfestigten Baumaterialschichten eingerichtet ist.

9. Vorrichtung nach einem der vorhergehenden Ansprüche, **dadurch gekennzeichnet, dass** das wenigstens eine Laserdiodenelement (10) an einer, insbesondere rahmenartigen, Halteeinrichtung (12) anordenbar oder angeordnet ist.

10. Vorrichtung nach Anspruch 9, **dadurch gekennzeichnet, dass** die Laserdiodenelemente (10) bedarfsweise an vorbestimmbaren oder vorbestimmten Anordnungspositionen der Halteeinrichtung (12) anordenbar oder angeordnet sind.

11. Vorrichtung nach Anspruch 10, **dadurch gekennzeichnet, dass** die Laserdiodenelemente (10) in im Hinblick auf eine Außen- und/oder Innenkontur eines herzustellenden dreidimensionalen Objekts (2) in einer bestimmten räumlichen Anordnung zueinander vorkonfigurierten Gruppen (22) bedarfsweise an vorbestimmbaren oder vorbestimmten Anordnungspositionen der Halteeinrichtung (12) anordenbar oder angeordnet sind.

12. Vorrichtung nach einem der Ansprüche 9 bis 11, **dadurch gekennzeichnet, dass** die Halteeinrichtung (12) in wenigstens einem Bewegungsfreiheitsgrad relativ zu der Bauebene (9) bewegbar gelagert ist.

13. Vorrichtung nach einem der Ansprüche 9 bis 11, **dadurch gekennzeichnet, dass** die Halteeinrichtung (12) nicht relativ zu der Bauebene (9) bewegbar gelagert ist, wobei die Einrichtung (4) eine Mehrzahl an Laserdiodenelementen (10) umfasst und die Laserdiodenelemente (10) wenigstens einen Teil der Bauebene (9), gegebenenfalls die vollständige, Bauebene (9) flächenmäßig abdecken.

14. Vorrichtung nach einem der Ansprüche 9 bis 13, **dadurch gekennzeichnet, dass** wenigstens ein Laserdiodenelement (10) in wenigstens einem Bewegungsfreiheitsgrad relativ zu der Halteeinrichtung (12) bewegbar an oder in der Halteeinrichtung (12) anordenbar oder angeordnet ist.

15. Vorrichtung nach einem Ansprüche 9 bis 14, **gekennzeichnet durch** eine Beschichtereinrichtung (7) zur Ausbildung einer zu verfestigenden Baumaterialschicht in der Bauebene (9), wobei die Beschichtereinrichtung (7), insbesondere in wenigstens einem Bewegungsfreiheitsgrad bewegbar relativ zu dieser gelagert, an der Halteeinrichtung (12) angeordnet oder ausgebildet ist.

16. Vorrichtung nach einem der Ansprüche 9 bis 15, **gekennzeichnet durch** eine Erfassungseinrichtung (15) zur Erfassung der Temperatur einer zu verfestigenden oder einer bereits verfestigten Baumaterialschicht (3) und/oder zur Erfassung der Schmelzcharakteristik einer zu verfestigenden oder verfestigten Baumaterialschicht (3), wobei die Erfassungseinrichtung (15), insbesondere in wenigstens einem Bewegungsfreiheitsgrad bewegbar relativ zu dieser gelagert, an der Halteeinrichtung (12) angeordnet oder ausgebildet ist.

17. Vorrichtung nach einem der Ansprüche 9 bis 16, **gekennzeichnet durch** wenigstens eine Auswerteeinrichtung (16) zur, insbesondere optischen, Auswertung der Oberflächenqualität einer zu verfestigenden und/oder einer verfestigten Baumaterialschicht und/oder zur Auswertung der Schmelzcharakteristik einer zu verfestigenden und/oder einer verfestigten Baumaterialschicht, wobei die Auswerteeinrichtung (16), insbesondere in wenigstens einem Bewegungsfreiheitsgrad relativ zu der Halteeinrichtung (12) bewegbar, an oder in der Halteeinrichtung (12) anordenbar oder angeordnet ist.

18. Vorrichtung nach einem der Ansprüche 9 bis 17, **dadurch gekennzeichnet, dass** die Halteeinrichtung (12) mehrere Halteeinrichtungssegmente (12a) umfasst, wobei wenigstens zwei Halteeinrichtungssegmente (12a) in wenigstens einem Bewegungsfreiheitsgrad relativ zu der Bauebene (9) und/oder in wenigstens einem Bewegungsfreiheitsgrad relativ zueinander bewegbar angeordnet sind.

19. Vorrichtung nach einem der vorhergehenden Ansprüche, **gekennzeichnet durch** eine Simulationseinrichtung, welche zur Simulation wenigstens eines im Rahmen der Durchführung eines generativen Bauprozesses veränderlichen objektbezogenen Objektparameters des generativ herzustellenden oder hergestellten dreidimensionalen Objekts (2) eingerichtet ist,
und eine Steuereinrichtung (11), welche zur gezielten Ansteuerung einzelner, mehrerer oder sämtlicher Laserdiodenelemente (10) zur jeweiligen Erzeugung eines Laserstrahls (5) bestimmter Strahleigenschaften auf Grundlage des durch die Simulationseinrichtung simulierten objektbezogenen Objektparameters eingerichtet ist.

20. Vorrichtung nach Anspruch 19, **dadurch gekennzeichnet, dass** der objektbezogene Objektparameter der im Rahmen der Durchführung eines generativen Bauprozesses entstehende Wärmefluss durch das generativ herzustellende oder hergestellte dreidimensionale Objekt (2) ist und/oder
der objektbezogene Objektparameter die im Rahmen der Durchführung eines generativen Bauprozesses entstehende Temperatur oder Temperaturverteilung des generativ herzustellenden oder hergestellten Objekts (2) ist, und/oder
der objektbezogene Objektparameter die im Rahmen der Durchführung eines generativen Bauprozesses entstehenden mechanischen Belastungen, insbesondere Spannungen, in dem generativ herzustellenden oder hergestellten dreidimensionalen Objekt (2) sind.

21. Verfahren zur generativen Herstellung wenigstens eines dreidimensionalen Objekts (2) durch sukzessive schichtweise selektive Verfestigung einzelner Baumaterialschichten (3) aus verfestigbarem Baumaterial (4) vermittels eines von einer Strahlungserzeugungseinrichtung (5) erzeugten Energiestrahls (6), **dadurch gekennzeichnet, dass** zur generativen Herstellung des wenigstens einen dreidimensionalen Objekts (2) eine Vorrichtung (1) zur generativen Herstellung wenigstens eines dreidimensionalen Objekts (2) nach einem der vorhergehenden Ansprüche verwendet wird.

## Claims

1. Apparatus (1) for the additive manufacture of a three-dimensional object (2) by successive layered selective hardening of construction material layers from hardenable construction material (3) by means of at least one laser beam (5), comprising at least one device (4) for generating at least one laser beam (5) for layered selective hardening of individual construction material layers from hardenable construction material (3), wherein the device (4)
comprises a plurality of laser diode elements (10) that can be or are arranged directly above the construction plane (9) in which construction material layers that are to be or have been selectively hardened are formed, which laser diode elements are each designed for generating a laser beam (5) oriented directly onto the construction plane, **characterised in that**
the plurality of laser diode elements (10) is arranged above one another in a plurality of planes, at a specific spatial offset relative to one another, wherein the arrangement of the laser diode elements (10) above one another in the plurality of planes is selected such that the laser beams (5) can in each case be oriented directly onto the construction plane (9), wherein
a laser beam (5) generated by a laser diode element (10) arranged in an upper plane strikes the construction plane (9) through a gap between laser diode elements (10) arranged directly adjacently in a lower plane.

2. Apparatus according to claim 1, **characterised in that** the laser diode elements (10) cover, in terms of area, at least a portion of the construction plane (9), optionally the entire construction plane (9).

3. Apparatus according to either claim 1 or claim 2, **characterised in that** a plurality of laser diode elements (10) are arranged in a row-like and/or column-like manner in at least one plane.

4. Apparatus according to any of the preceding claims, **characterised in that** a plurality of, optionally all of, the laser diode elements (10) can be or are arranged with respect to an outer and/or inner contour of a three-dimensional object (2) that is to be manufactured.

5. Apparatus according to any of the preceding claims, **characterised in that** at least one laser diode element (10) is variable in at least one parameter that relates to the beam properties of the laser beam (5) that can be generated thereby, in particular in its output power.

6. Apparatus according to any of the preceding claims, **characterised in that** the laser diode elements (10) can be actuated, in particular can be activated and/or deactivated, individually, in groups or together, for generating, in each case, a laser beam (5) having particular beam properties.

7. Apparatus according to any of the preceding claims, **characterised in that** individual, a plurality of, or all of the laser diode elements (10) differ in at least one beam property of the laser beam (5) that can be generated thereby in each case.

8. Apparatus according to claim 7, **characterised in that** at least one first laser diode element (10) is designed for generating a laser beam (5) for hardening construction material layers to be hardened, and at least one further laser diode element (10) is designed for generating a laser beam (5) for pre-temperature control of construction material layers to be hardened, and/or for generating a laser beam for post-temperature control of construction material layers that are already hardened.

9. Apparatus according to any of the preceding claims, **characterised in that** the at least one laser diode element (10) can be or is arranged on an, in particular frame-like, holding device (12).

10. Apparatus according to claim 9, **characterised in that** the laser diode elements (10) can be or are arranged, as required, at predetermined or predeterminable arrangement positions of the holding device (12).

11. Apparatus according to claim 12, **characterised in that** the laser diode elements (10) can be or are arranged, as required, at predetermined or predeterminable arrangement positions of the holding device (12), with respect to an outer and/or inner contour of a three-dimensional object (2) to be manufactured, in a particular spatial arrangement, relative to one another, of preconfigured groups (22).

12. Apparatus according to any of claims 9 to 11, **characterised in that** the holding device (12) is mounted so as to be movable relative to the construction plane (9) in at least one degree of freedom of movement.

13. Apparatus according to any of claims 9 to 11, **characterised in that** the holding device (12) is mounted such that it is not movable relative to the construction plane (9), wherein the device (4) comprises a plurality of laser diode elements (10), and the laser diode elements (10) cover, in terms of area, at least a portion of the construction plane (9), optionally the entire construction plane (9).

14. Apparatus according to any of claims 9 to 13, **characterised in that** at least one laser diode element (10) can be or is arranged on or in the holding device (12) so as to be movable relative to the holding device (12) in at least one degree of freedom of movement.

15. Apparatus according to any of claims 9 to 14, **characterised by** a coater device (7) for forming a construction material layer, to be hardened, in the construction plane (9), wherein the coater device (7) is arranged or formed on the holding device (12), in particular mounted so as to be movable relative thereto in at least one degree of freedom of movement.

16. Apparatus according to any of claims 9 to 15, **characterised by** a detection device (15) for detecting the temperature of a construction material layer (3) that is to be hardened or is already hardened, and/or for detecting the melting characteristics of a construction material layer (3) that is to be hardened or is hardened, wherein the detection device (15) is arranged or formed on the holding device (12), in particular mounted so as to be movable relative thereto in at least one degree of freedom of movement.

17. Apparatus according to any of claims 9 to 16, **characterised by** at least one evaluation device (16) for, in particular optical, evaluation of the surface quality of a construction material layer that is to be hardened and/or is hardened, and/or for evaluation of the melting characteristics of a construction material layer that is to be hardened and/or is hardened, wherein the evaluation device (16) can be or is arranged on or in the holding device (12), in particular so as to be movable relative to the holding device (12) in at least one degree of freedom of movement.

18. Apparatus according to any of claims 9 to 17, **characterised in that** the holding device (12) comprises a plurality of holding device segments (12a), wherein at least two holding device segments (12a) are arranged so as to be movable relative to the construction plane (9) in at least one degree of freedom of movement, and/or so as to be movable relative to one another in at least one degree of freedom of movement.

19. Apparatus according to any of the preceding claims, **characterised by** a simulation device which is designed for simulating at least one object-related object parameter of the three-dimensional object (2) that is to be or is manufactured additively, which parameter is variable within the scope of carrying out an additive construction process,
and a control device (11) which is designed for targeted actuation of individual, a plurality of, or all the laser diode elements (10) for in each case generating a laser beam (5) having particular beam properties on the basis of the object-related object parameter simulated by the simulation device.

20. Apparatus according to claim 19, **characterised in that** the object-related object parameter is the heat flow through the three-dimensional object (2) that is to be or is manufactured additively, which heat flow results within the context of carrying out an additive construction process, and/or
the object-related object parameter is the mechanical loads, in particular stresses, in the three-dimensional object (2) that is to be or is manufactured additively, which loads result within the context of carrying out an additive construction process.

21. Method for the additive manufacture of at least one three-dimensional object (2) by successive layered selective hardening of individual construction material layers (3) from hardenable construction material (4) by means of at least one energy beam (6) generated by a radiation generation device (5), **characterised in that**, for the additive manufacture of the at least one three-dimensional object (2), an apparatus (2) for the additive manufacture of at least one three-dimensional object (2) according to any of the preceding claims is used.

## Revendications

1. Dispositif (1) de fabrication additive d'un objet tridimensionnel (2) par solidification sélective successive par couches de couches de matériau de construction composées d'un matériau de construction (3) pouvant être solidifié au moyen d'au moins un faisceau laser (5), comprenant au moins un système (4) de production d'au moins un faisceau laser (5) pour solidifier de manière sélective par couches diverses couches de matériau de construction composées d'un matériau de construction (3) pouvant être solidifié, dans lequel le système (4) comprend plusieurs éléments à diode laser (10) pouvant être disposés ou disposés directement au-dessus du plan de construction (9), dans lequel des couches de matériau de construction à solidifier ou solidifiées de manière sélective sont réalisées, lesquels sont mis au point respectivement pour produire un faisceau laser (5) dirigé directement sur le plan de construction, **caractérisé en ce que** les plusieurs éléments à diode laser (10) sont disposés les uns au-dessus des autres dans plusieurs plans selon un décalage spatial défini les uns par rapport aux autres, dans lequel
la disposition des éléments à diode laser (10) dans les plusieurs plans les uns au-dessus des autres est choisie de telle sorte que les faisceaux laser (5) peuvent être dirigés respectivement directement sur le plan de construction (9), dans lequel
un faisceau laser (5) produit par un élément à diode laser (10) disposé dans un plan supérieur atteint le plan de construction (9) par un espace libre entre des éléments à diode laser (10) disposés de manière directement adjacente dans un plan inférieur.

2. Dispositif selon la revendication 1, **caractérisé en ce que** les éléments à diode laser (10) recouvrent en surface au moins une partie du plan de construction (9), éventuellement la totalité du plan de construction (9).

3. Dispositif selon la revendication 1 ou 2, **caractérisé en ce que** plusieurs éléments à diode laser (10) sont disposés en rangées et/ou en colonnes dans au moins un plan.

4. Dispositif selon l'une quelconque des revendications précédentes, **caractérisé en ce que** plusieurs, éventuellement tous les, éléments à diode laser (10) peuvent être disposés ou sont disposés en ce qui concerne un contour extérieur et/ou intérieur d'un objet tridimensionnel (2) à fabriquer.

5. Dispositif selon l'une quelconque des revendications précédentes, **caractérisé en ce qu'**au moins un élément à diode laser (10) peut varier dans au moins un paramètre concernant les propriétés de rayonnement du faisceau laser (5) pouvant être produit par l'intermédiaire de celui-ci, en particulier dans sa puissance de sortie.

6. Dispositif selon l'une quelconque des revendications précédentes, **caractérisé en ce que** les éléments à diode laser (10) peuvent être pilotés, en particulier peuvent être activés et/ou désactivés, individuellement, en groupes ou conjointement pour produire respectivement un faisceau laser (5) avec certaines propriétés de rayonnement.

7. Dispositif selon l'une quelconque des revendications précédentes, **caractérisé en ce que** divers, plusieurs ou tous les éléments à diode laser (10) se distinguent dans au moins une propriété de rayonnement du faisceau laser (5) pouvant être produit respectivement par l'intermédiaire de ceux-ci.

8. Dispositif selon la revendication 7, **caractérisé en ce qu'**au moins un premier élément à diode laser (10) est mis au point pour produire un faisceau laser (5) destiné à solidifier des couches de matériau de construction à solidifier et au moins un autre élément à diode laser (10) est mis au point pour produire un faisceau laser (5) pour réguler préalablement des couches de matériau de construction à solidifier et/ou pour produire un faisceau laser pour réguler ultérieurement des couches de matériau de construction déjà solidifiées.

9. Dispositif selon l'une quelconque des revendications précédentes, **caractérisé en ce que** l'au moins un élément à diode laser (10) peut être disposé ou est disposé sur un système de maintien (12) en particulier de type cadre.

10. Dispositif selon la revendication 9, **caractérisé en ce que** les éléments à diode laser (10) peuvent être disposés ou sont disposés si besoin sur des positions de disposition du système de maintien (12) pouvant être prédéfinies ou prédéfinies.

11. Dispositif selon la revendication 10, **caractérisé en ce que** les éléments à diode laser (10) peuvent être disposés ou sont disposés si besoin sur des positions de disposition du système de maintien (12) pouvant être prédéfinies ou prédéfinies dans des groupes (22) configurés préalablement les uns par rapport aux autres selon une disposition spatiale définie en ce qui concerne un contour extérieur et/ou intérieur d'un objet tridimensionnel (2) à fabriquer.

12. Dispositif selon l'une quelconque des revendications 9 à 11, **caractérisé en ce que** le système de maintien (12) est monté de manière mobile selon au moins un degré de liberté de mouvement par rapport au plan de construction (9).

13. Dispositif selon l'une quelconque des revendications 9 à 11, **caractérisé en ce que** le système de maintien (12) est monté de manière non mobile par rapport au plan de construction (9), dans lequel le système (4) comprend une multitude d'éléments à diode laser (10) et les éléments à diode laser (10) recouvrent en surface au moins une partie du plan de construction (9), éventuellement la totalité du plan de construction (9).

14. Dispositif selon l'une quelconque des revendications 9 à 13, **caractérisé en ce qu'**au moins un élément à diode laser (10) peut être disposé ou est disposé sur ou dans le système de maintien (12) de manière mobile selon au moins un degré de liberté de mouvement par rapport au système de maintien (12).

15. Dispositif selon l'une quelconque des revendications 9 à 14, **caractérisé par** un système de revêtement (7) destiné à réaliser une couche de matériau de construction à solidifier dans le plan de construction (9), dans lequel le système de revêtement (7) est disposé ou est réalisé sur le système de maintien (12), en particulier est monté de manière mobile selon au moins un degré de liberté de mouvement par rapport à celui-ci.

16. Dispositif selon l'une quelconque des revendications 9 à 15, **caractérisé par** un système de détection (15) destiné à détecter la température d'une couche de matériau de construction (3) à solidifier ou une couche de matériau de construction déjà solidifiée et/ou destiné à détecter la caractéristique de fusion d'une couche de matériau de construction (3) à solidifier ou solidifiée, dans lequel le système de détection (15) est disposé ou réalisé sur le système de maintien (12), en particulier est monté de manière mobile selon au moins un degré de liberté de mouvement par rapport à celui-ci.

17. Dispositif selon l'une quelconque des revendications 9 à 16, **caractérisé par** au moins un système d'évaluation (16) destiné à évaluer, en particulier de manière optique, la qualité de surface d'une couche de matériau de construction à solidifier et/ou d'une couche de matériau de construction solidifiée et/ou destiné à évaluer la caractéristique de fusion d'une couche de matériau de construction à solidifier et/ou d'une couche de matériau de construction solidifiée, dans lequel le système d'évaluation (16) peut être disposé ou est disposé sur ou dans le système de maintien (12), en particulier de manière mobile selon au moins un degré de liberté de mouvement par rapport au système de maintien (12).

18. Dispositif selon l'une quelconque des revendications 9 à 17, **caractérisé en ce que** le système de maintien (12) comprend plusieurs segments de système de maintien (12a), dans lequel au moins deux segments de système de maintien (12a) sont disposés de manière mobile selon au moins un degré de liberté de mouvement par rapport au plan de construction (9) et/ou de manière mobile selon au moins un degré de liberté de mouvement l'un par rapport à l'autre.

19. Dispositif selon l'une quelconque des revendications précédentes, **caractérisé par** un système de simulation, lequel est mis au point pour simuler au moins un paramètre d'objet lié à l'objet, variable dans le cadre de la mise en oeuvre d'un processus de fabrication additive, de l'objet tridimensionnel (2) à fabriquer ou fabriqué de manière additive
et un système de commande (11), lequel est mis au point pour piloter de manière ciblée divers, plusieurs ou tous les éléments à diode laser (10) destinés à produire respectivement un faisceau laser (5) à propriétés de rayonnement définies sur la base du paramètre d'objet lié à l'objet simulé par le système de simulation.

20. Dispositif selon la revendication 19, **caractérisé en ce que** le paramètre d'objet lié à l'objet est le flux thermique se formant dans le cadre de la mise en oeuvre d'un processus de fabrication additive à travers l'objet tridimensionnel (2) à fabriquer ou fabriqué de manière additive, et/ou
le paramètre d'objet lié à l'objet est la température ou la répartition de température, se formant dans le cadre de la mise en oeuvre d'un procédé de construction additive, de l'objet (2) à fabriquer ou fabriqué de manière additive, et/ou
le paramètre d'objet lié à l'objet est les contraintes mécaniques se formant dans le cadre de la mise en oeuvre d'un processus de fabrication additive, en particulier des tensions, dans l'objet tridimensionnel (2) à fabriquer ou fabriqué de manière additive.

21. Procédé de fabrication additive d'au moins un objet tridimensionnel (2) par solidification sélective successive par couches de couches de matériau de construction (3) individuelles composées d'un matériau de construction (4) pouvant être solidifié au moyen d'un faisceau d'énergie (6) produit par un système de production de rayonnement (5), **caractérisé en ce qu'**un dispositif (1) de fabrication additive d'au moins un objet tridimensionnel (2) selon l'une quelconque des revendications précédentes est utilisé pour la fabrication additive de l'au moins un objet tridimensionnel (2).
